# EUROPEAN PATENT APPLICATION

(11) **EP 1 530 037 A1**
(43) Date of publication of application: **11.05.2005**
(21) Application number: 03784495.8
(22) Date of filing: 31.07.2003
(51) Int. Cl.: G01L 23/00, G01L 9/08, F02P 19/00, F02D 35/00, H01L 41/08

(54) **PRESSURE SENSOR, METHOD OF PRODUCING THE SENSOR, AND IN-CYLINDER PRESSURE DETECTION STRUCTURE OF INTERNAL COMBUSTION ENGINE**

(30) Priority: 09.08.2002 JP 2002233605
(71) Applicant: Bosch Automotive Systems Corporation, Tokyo 150-8360 (JP)
(72) Inventor: TOMITA, N; c/o Bosch Automotive Systems Co., Higashimatsuyama-shi, Saitama 355-8603 (JP); KASUKAWA, K.; c/o Bosch Automotive Systems Co., Higashimatsuyama-shi, Saitama 355-8603 (JP)
(74) Representative: HOFFMANN - EITLE
(86) International application number: PCT/JP2003/009761
(87) International publication number: WO 2004/015385

(57) **Abstract**

In a pressure sensor A according to the presenting invention, a piezoelectric element B formed by a thin film of aluminium nitride is mounted on a base material C of an insulating material, and output electrodes D and E and output lead wires F and G which transmit a signal detected by the piezoelectric element B are mounted on the side of the base material C. The pressure sensor A is directly mounted on a cylinder head e of an internal combustion engine, or is mounted on the outer surface of a heater L which is secured at the free end of a glow plug K, whereby it is disposed to face a combustion chamber h. A combustion pressure or oscillations during the operation of the engine can be detected with a high sensitivity.

## Description

### TECHNICAL FIELD

The present invention relates to a pressure sensor, for example, a pressure sensor installed within a cylinder of an internal combustion engine for detecting a combustion pressure and oscillations within the cylinder during operation of the engine. The invention also relates to a method of manufacturing such a pressure sensor and to a structure utilizing the pressure sensor for detecting cylinder internal pressure of the internal combustion engine.

### BACKGROUND ART

A variety of power train control techniques are used in an internal combustion engine with an intent to cope with the purification of exhaust gases and a compatible attainment of improvements in the fuel cost and the engine performance. If it were possible to detect a change in the combustion pressure within the cylinder exactly and to detect a manner of injection from an injector exactly, an optimum control of ignition timing, a more precise control of fuel injection and a rapid accommodation for an injection abnormality are enabled, allowing the above intent to be achieved.

A high temperature sensor which detects abnormality in the combustion of an internal combustion engine in conformity to the intent described above is already known (Japanese Laid-Open Patent Application No. 10-122948). The sensor of this first citation comprises a substrate formed by a sintered body of ceramics, a thin film of piezoelectric ceramics formed on the substrate and a pair of electrodes disposed on one side of the thin film of piezoelectric ceramics.

Arrangements in which a pressure sensor is assembled into a glow plug, a spark plug or an injector in order to install a pressure sensor as mentioned above within the cylinder of an internal combustion engine have already been proposed (Japanese Laid-Open Patent Application No. 7-45,353, Japanese Laid-Open Utility Model Application No. 4-57,056, Japanese Laid-Open Patent Application No. 2001-108,556, etc).

A spark plug disclosed in the second citation (Japanese Laid-Open Patent Application No. 7-45,353) includes a pressure sensor comprising pressure-electrical signal conversion means and output pick-up means and disposed within a space formed between a housing secured to a cylinder head and an electrical porcelain which is carried within the housing. The pressure sensor is disposed externally of a mounting screw of the housing with respect to the cylinder head or externally of the cylinder.

The spark plug disclosed in this citation is arranged such that a combustion pressure generated within the cylinder is transmitted through the electrical porcelain to the pressure sensor which is disposed externally of a mounting screw used to connect with the cylinder head.

A glow plug with an ignition sensor disclosed in the third citation (Japanese Laid-Open Utility Model Application No. 4-57,056) is arranged such that a sheath containing a heating element is fitted into a tubular housing so that a rear end of the sheath is located within the housing and a center electrode is inserted into the sheath through the rear end of the housing with a bushing fitted between the center electrode and the housing to provide an insulation therebetween. The sheath is very slightly slidable with respect to the housing, and a piezoelectric element is interposed between the rear end of the sheath and the insulating bushing, and a resilient member which urges the piezoelectric element toward the sheath is interposed between the piezoelectric element and the insulating bushing.

In the operation of the glow plug with an ignition sensor constructed in the manner mentioned above, when an ignition of a combustion gas occurs, a pressure within a combustion chamber rises to urge the sheath of the glow plug which has its forward end projecting into the combustion chamber rearward, and such force is transmitted to the piezoelectric element which is located at the rear end of the sheath. An output that is produced in accordance with the magnitude of the pressure applied to the piezoelectric element allows an ignition timing within the combustion chamber to be detected.

A pressure sensor for an internal combustion engine which is disclosed in the fourth citation (Japanese Laid-Open Patent Application No. 2001-108,556) includes a piezoelectric sensor which is integrally secured to an injector. The injector has a fixing screw which is formed around its outer periphery and which is threadably engaged with threads in the cylinder head to be secured. When the injector is secured to the cylinder head, the lower end (injection port side) of the injector faces the interior of the combustion chamber while the piezoelectric sensor is brought into abutment against the outer surface of the cylinder head. The pressure sensor disclosed in the fourth citation is arranged such that it detects a pressure within the combustion chamber of the engine and oscillations which are attendant to the injection of the fuel from the injector to deliver a pressure signal.

In the pressure sensor disclosed in the first citation (Japanese Laid-Open Patent Application No. 10-122,948), an electrode which takes out an electrical signal is provided on the surface of the piezoelectric element (thin film of piezoelectric ceramics) formed on the ceramics substrate or on the surface which is opposite from the substrate. Accordingly, when the pressure sensor is installed within a combustion chamber of an internal combustion engine, for example, signal transmitting means such as the electrode and an output lead wire, not shown, are directly exposed to a high temperature environment within the combustion chamber, causing a problem of the durability. In addition, if a carbon is deposited during use over a prolonged period of time, there is a likelihood that a conduction may occur between the both electrodes.

With the plug which internally houses a pressure sensor as disclosed in the second citation (Japanese Laid-Open Patent Application No. 7-45,353), the pressure sensor is mounted on the cylinder head at a location externally of the fixing screw, and accordingly, a force which is transmitted to the pressure-electrical signal conversion means becomes attenuated, and accordingly, it is difficult to catch a change in the combustion pressure exactly. In particular, there remains a problem that it is difficult to catch the timing of initiation of the ignition exactly.

In the glow plug with an ignition sensor disclosed in the third citation (Japanese Laid-Open Utility Model Application No. 4-57,056), it is noted that a sophistication is made to provide an effective propagation of a force by making the sheath to be movable with respect to the housing. However, it is subject to friction heating between the sheath and the housing, and it cannot be evaluated as exhibiting an excellent accuracy of detection. In addition, there is a tendency that the interior of the housing assumes a high pressure, presenting a likelihood of presenting a problem in respect of the durability as a result of a failure of a hermetic seal of the sheath and the breakage of the heater.

In the pressure sensor for an internal combustion engine disclosed in the fourth citation (Japanese Laid-Open Patent Application No. 2001-108,556), the sensor is mounted externally of the cylinder head in the similar manner as the plug internally housing the pressure sensor as disclosed in the first citation, and therefore it is difficult to catch a change in the combustion pressure exactly. In addition, as for detecting the oscillations during the injection of the fuel, a distance from the injection port is too far to provide a sufficient accuracy for the sensor which is intended to detect an abnormality.

Finally, with respect to the plug internally housing the pressure sensor, the glow plug with an ignition sensor and the piezoelectric element in the pressure sensor for an internal combustion engine which are disclosed in the second to the fourth citation, the freedom of installation is limited, and it is difficult to install such sensor at a location which enables the detection of a combustion pressure or a fuel injection pressure with a high accuracy.

The present invention has been made in order to solve the problems mentioned above, and has for its object the provision of a pressure sensor which is suitable for use in a harsh, high temperature environment such as in a combustion chamber of an internal combustion engine. It is also an object of the invention to provide a structure for detecting a cylinder internal pressure of an internal combustion engine provided with a pressure sensor capable of exactly detecting a combustion pressure or oscillations in an internal combustion engine or a manner of injection from a fuel injection nozzle and capable of controlling an optimum ignition timing and a precise fuel injection. It is also other objects of the present invention to provide a pressure sensor including a piezoelectric element in the form of a thin film to permit it to be installed freely and to be capable of achieving a measurement with high accuracy, and to provide a structure for detecting a cylinder internal pressure of an internal combustion engine which incorporates such pressure sensor.

### DISCLOUSURE OF THE INVENTION

A pressure sensor according to the invention defined in Claim1 is characterized in that a piezoelectric element in the form of a thin film and formed of a material such as a nitride or oxide is mounted on a base material of an insulating member, and signal transmitting means from the piezoelectric element is passed through the base material to be taken externally.

The pressure sensor according to this invention is arranged so that a signal transmitting means which conveys a signal from the piezoelectric material in the form of a thin film and formed of a material such as a nitride or oxide is passed through the base material to be taken externally. Accordingly, when used in an environment such as within a combustion chamber of an internal combustion engine, a sufficient durability is secured, permitting a combustion pressure or oscillations to be detected with a high accuracy. Because the piezoelectric element is in the form of a thin film and can be in a compact form, a high freedom of installation is obtained, allowing a detection of a combustion pressure with a very high accuracy and a detection of a manner of injection from an injector.

A structure for detecting a cylinder internal pressure of an internal combustion engine according to the invention defined in Claim 7 is characterized in that a piezoelectric element of a pressure sensor is disposed at a location which faces the interior of a combustion chamber of an internal combustion engine.

In the structure for detecting a cylinder internal pressure of an internal combustion engine according to this invention, the piezoelectric element is disposed within the combustion chamber of the internal combustion engine, and accordingly, as soon as the internal combustion engine is started and the combustion is initiated, the pressure sensor detects the pressures and oscillations which are generated attendant to the combustion, but because the pressure sensor is mounted on a portion of a free end of a housing which faces the interior of the combustion chamber, the sensitivity of the pressure sensor is very high in comparison to the prior art arrangement, permitting a timing of the incipiency of ignition, a condition of combustion or a fuel injection pressure or the like to be detected with a high accuracy.

A structure for detecting a cylinder internal pressure of an internal combustion engine according to the invention defined in Claim 15 is characterized in that a piezoelectric element of the pressure sensor is mounted on a portion of an auxiliary part of the internal combustion engine which is secured toward the cylinder head of the internal combustion engine which faces the interior of combustion chamber.

In the structure for detecting a cylinder internal pressure of an internal combustion engine according to this invention, an auxiliary part which is normally mounted on an internal combustion engine is used to dispose the pressure sensor within the combustion chamber of the internal combustion engine, thus dispensing with a mounting space on the cylinder head while facilitating a mounting and a replacement with a very slight cost-up. A combustion pressure or a manner of a fuel injection can be precisely detected with a high sensitivity without degrading the performance of the engine, an ignition plug or an injector. Since the timing of incipiency of an ignition or a manner of fuel injection can be exactly detected, a more optimum ignition timing control and a more precise fuel injection control can be performed. The fuel injection control and the ignition timing control which take place in an optimum manner enables a saving of the fuel cost, a low emission and an improvement of the engine performance.

### BRIEF DESCRIPTION OF THE DRAWINGS

Fig. 1 is a plan view of a pressure sensor according to one embodiment of the present invention;
Fig. 2 is a longitudinal section of the pressure sensor;
Fig. 3 is a schematic view of one embodiment of a structure for detecting a cylinder internal pressure of an internal combustion engine including a pressure sensor disposed within the pressure chamber of the internal combustion engine;
Fig. 4 is a cross section, to an enlarged scale, of an essential part of the previous embodiment, illustrating the construction used to mount a pressure sensor on a cylinder head;
Fig. 5 is a schematic view of another embodiment of the structure for detecting a cylinder internal pressure of an internal combustion engine including a pressure sensor disposed within the combustion chamber of the internal combustion engine;
Fig. 6 is a cross section, to an enlarged scale, of an essential part of the embodiment shown in Fig. 5, illustrating a construction used to mount on a pressure sensor on a cylinder head;
Fig. 7 is a longitudinal section of an embodiment in which a pressure sensor constructed as shown in Fig. 4 is provided with a protective film;
Fig. 8 is a longitudinal section of an embodiment in which a pressure sensor as constructed in Fig. 6 is provided with a protective film;
Fig. 9 is a longitudinal section of an embodiment in which electrodes are mounted on the both surfaces of a piezoelectric element;
Fig. 10 is a longitudinal section of an embodiment of a structure for detecting a cylinder internal pressure of an internal combustion engine including a pressure sensor which is mounted on a glow plug;
Fig. 11 is a view, to an enlarged scale, illustrating an essential part of the embodiment shown in Fig. 10;
Fig. 12 is a longitudinal section, to an enlarged scale, of an essential part of a structure for detecting a cylinder internal pressure of an internal combustion engine according to a further embodiment;
Fig. 13 is a longitudinal section, to an enlarged scale, illustrating an essential part of a structure for detecting a cylinder internal pressure of an internal combustion engine according to still another embodiment;
Fig. 14 is a longitudinal section, to an enlarged scale, illustrating an essential part of a structure for detecting a cylinder internal pressure of an internal combustion engine according to yet another embodiment;
Fig. 15(a) is a longitudinal section of an embodiment of a structure for detecting a cylinder internal pressure of an internal combustion engine in which a pressure sensor is mounted on a glow plug having a different type of heater;
Fig. 15(b) is a cross section of the embodiment shown in Fig. 15(a);
Fig. 16(a) is a longitudinal section, to an enlarged scale, illustrating an essential part of a structure for detecting a cylinder internal pressure of an internal combustion engine according to a still further embodiment;
Fig. 16(b) is a cross section of the embodiment shown in Fig. 16(a);
Fig. 17(a) is a longitudinal section, to an enlarged scale, illustrating an essential part of a structure for detecting a cylinder internal pressure of an internal combustion engine according to yet further embodiment;
Fig. 17(b) is a cross section of the embodiment shown in Fig. 17(a);
Fig. 18 is a longitudinal section of one embodiment of a structure for detecting a cylinder internal pressure of an internal combustion engine including a pressure sensor mounted on a glow plug having a still different type of heater;
Fig. 19 is a longitudinal section of a different embodiment of a structure for detecting a cylinder internal pressure of an internal combustion engine including a pressure sensor mounted on a glow plug having the same type of heater as shown in Fig. 18;
Fig. 20 is a longitudinal section of a structure for detecting a cylinder internal pressure of an internal combustion engine including a pressure sensor in a glow plug according to another embodiment;
Fig. 21 is a longitudinal section of a further embodiment of a structure for detecting a cylinder internal pressure of an internal combustion engine including a pressure sensor mounted on a glow plug;
Fig. 22 is an enlarged view of an essential part shown in Fig. 21;
Fig. 23 is a cross section illustrating the glow plug with pressure sensor shown in Fig. 21 as mounted on an engine;
Fig. 24 is an enlarged view of an essential part shown in Fig. 23;
Fig. 25 is a longitudinal section of a further embodiment of a structure for detecting a cylinder internal pressure of an internal combustion engine including a pressure sensor mounted on a glow plug;
Fig. 26 is an enlarged view of an essential part shown in Fig. 25;
Fig. 27 is a longitudinal section of still another embodiment of a structure for detecting a cylinder internal pressure of an internal combustion engine including a pressure sensor mounted on a glow plug;
Fig. 28 is an enlarged view of an essential part shown in Fig. 27;
Fig. 29 is a longitudinal section of still another embodiment of a structure for detecting a cylinder internal pressure of an internal combustion engine including a pressure sensor mounted on a glow plug;
Fig. 30 is an enlarged view of an essential part shown in Fig. 29;
Fig. 31 is a longitudinal section of a still further embodiment of a structure for detecting a cylinder internal pressure of an internal combustion engine including a pressure sensor mounted on a glow plug;
Fig. 32 shows an electrode fitting used in the glow plug with a pressure sensor shown in Fig. 31, Fig. 32(a) being a front view, Fig. 32(b) a longitudinal section, Fig. 32(c) a left-hand side elevation of Fig. 32(b) and Fig. 32(d) a right-hand side elevation of Fig. 32(b);
Fig. 33 is a longitudinal section of yet further embodiment of a structure for detecting a cylinder internal pressure of an internal combustion engine including a pressure sensor mounted on a glow plug;
Fig. 34 is a longitudinal section of yet another embodiment of a structure for detecting a cylinder internal pressure of an internal combustion engine including a pressure sensor mounted on a glow plug;
Fig. 35 is a longitudinal section of a different embodiment of a structure for detecting a cylinder internal pressure of an internal combustion engine including a pressure sensor mounted on a glow plug;
Fig. 36 is a longitudinal section of one embodiment of a structure for detecting a cylinder internal pressure of an internal combustion engine including a pressure sensor mounted on an ignition spark plug;
Fig. 37 is a longitudinal section of an embodiment of a structure for detecting a cylinder internal pressure of an internal combustion engine including a pressure sensor mounted on an ignition spark plug having a different construction;
Fig. 38 is an enlarged view of an encircled region A shown in Fig. 37;
Fig. 39 is a longitudinal section of one embodiment of a structure for detecting a cylinder internal pressure of an internal combustion engine including a pressure sensor mounted on an injector; and
Fig. 40 is a longitudinal section of a modification in which the position of the pressure sensor mounted on the injector is changed and is an enlarged view of an encircled region B shown in Fig. 39.

### BEST MODES FOR CARRYING OUT THE INVENTION

Several embodiments of the present invention shown in the drawings will now be described. A pressure sensor A includes a piezoelectric element B in the form of a thin film, which is mounted on a base material C formed of an insulating material such as insulating ceramics. In the embodiment, the piezoelectric element B uses a thin film of aluminium nitride (AlN) having a C-axis orientation.

Signal transmitting means which delivers an electrical signal detected by the thin film of the piezoelectric element B comprises a first and a second output electrode D and E, which are disposed on the surface of the piezoelectric element B which is disposed toward the base material C. Output lead wires F and G which also define the signal transmitting means and which are connected to the electrodes D and E, respectively, pass through the inside of the base material C. Thus, in distinction to the prior art arrangement (Japanese Laid-Open Patent Application No. 10-122,984), the pair of electrodes D and E and lead wires F and G, which represent the signal transmitting means from the thin film of the piezoelectric element B, are not exposed on the surface of the piezoelectric element, but are embedded inside the base material C. Accordingly, if it is installed in a harsh environment of high temperatures and severe oscillations such as within a combustion chamber of an internal combustion engine, it has a high durability, maintaining its capability to detect a pressure or the like with a high accuracy over a prolonged period of time.

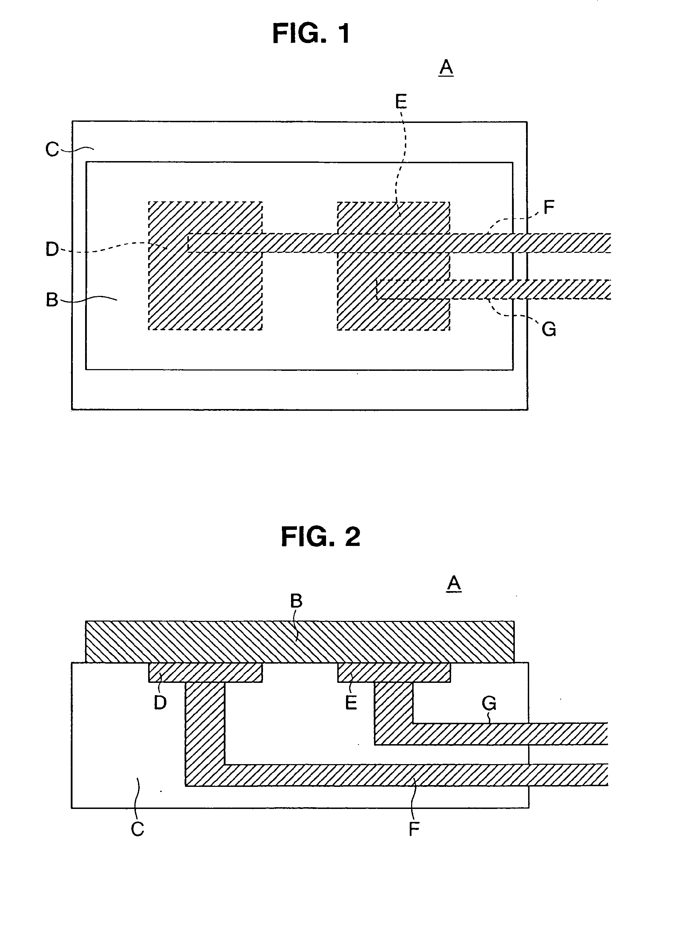

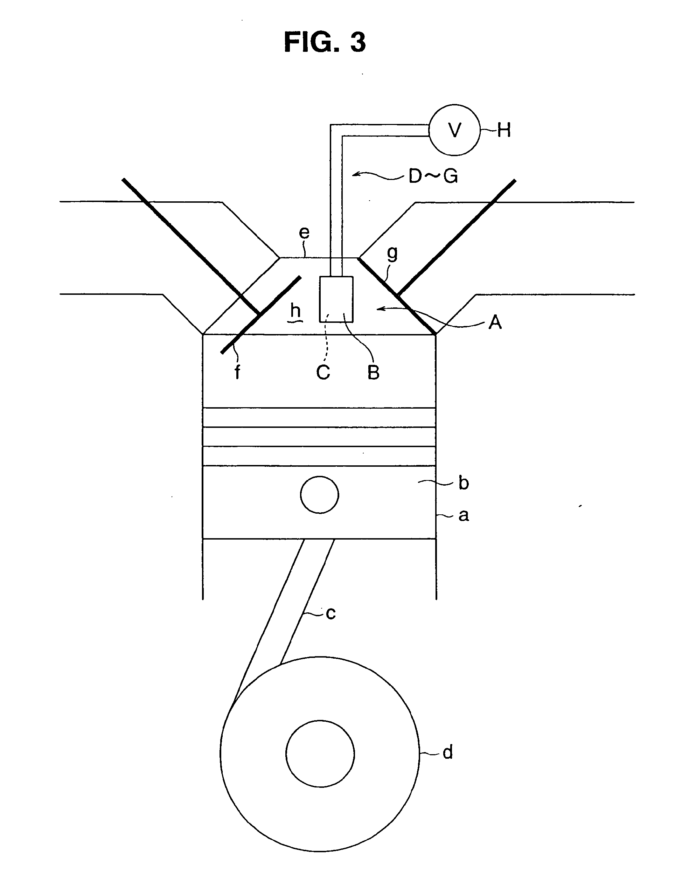

Fig. 3 shows an example in which the pressure sensor A constructed in the manner mentioned above is installed within a combustion chamber of an internal combustion engine, and illustrates one embodiment of a structure for detecting a cylinder internal pressure of an internal combustion engine according to another aspect of the present invention. The construction of the internal combustion engine is well known in the art, and therefore will not be described in detail. However, briefly, a piston b is slidably fitted into a cylinder a, and a reciprocating motion of the piston b is transmitted through a connecting rod c to a crankshaft d. A cylinder head e disposed above the cylinder a is formed with an inlet valve f and an exhaust valve g, and the piezoelectric element B of the pressure sensor A (see Figs. 1 and 2) constructed in the manner mentioned above is mounted on the internal wall of the cylinder head e through an insulating material C interposed. Accordingly, the pressure sensor A is positioned to face a combustion chamber h of the internal combustion engine. A signal detected by the piezoelectric element B is fed through the signal transmitting means D to G to be input to measuring means (voltmeter) H. It should be understood that the construction of the pressure sensor A is not limited to the ones shown in Figs. 1 and 2. The present invention is applicable to either a gasoline engine or a diesel engine as an internal combustion engine.

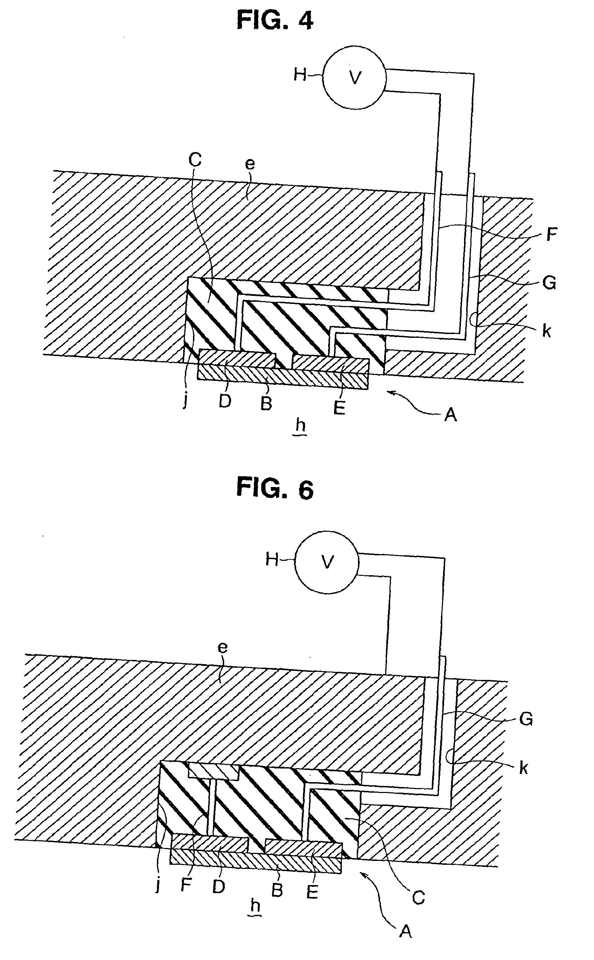

A specific example of a structure for mounting the pressure sensor A onto the cylinder head e will be described with reference to Fig. 4. In this arrangement, an insulating member insertion opening j is formed in the wall surface of the cylinder head e toward the combustion chamber h (or the downside as viewed in Fig. 4), and the insulating member (the base material) C is embedded into the insertion opening j, and the thin film of piezoelectric element B is mounted on the surface thereof.

The pair of electrodes D and E are mounted on the surface of the thin film of piezoelectric element B which is disposed toward the insulating member C. The output lead wires F and G which transmit an electrical signal detected by the piezoelectric element B are connected to the electrodes D and E, respectively, and after passing the both lead wires F and G through the insulating member C, they are taken externally through a signal duct opening k which opens into the external surface of the cylinder head e.

In an arrangement as mentioned above in which the pressure sensor A is mounted within the combustion chamber h of the internal combustion engine, when the engine is started and a combustion pressure generated within the combustion chamber h of the cylinder is transmitted to the thin film of the piezoelectric element B, an electrical signal which is delivered changes according to the piezoelectric characteristic of the piezoelectric element B in accordance with a change in the combustion pressure. This output is transmitted through the signal transmitting means, or the pair of electrodes D and E and output lead wires F and G to be input to measuring means (voltmeter) H, thereby allowing the combustion pressure to be detected.

When the pressure sensor A is directly mounted within the chamber h, the sensitivity is higher than when a sensor is mounted on the outside of the cylinder head e as in the conventional arrangement (refer Japanese Laid-Open Patent Applications No. 7-45,353 and No. 2001-108,556), allowing a combustion pressure to be detected with a high accuracy. In addition, a change in the combustion pressure allows an ignition timing to be detected exactly, thus allowing an optimum ignition timing control. As a consequence, an advantageous effect can be achieved including a saving of a fuel cost, a purification of the exhaust gas and an improvement of the engine performance. In addition, because a thin film of aluminium nitride is used for the piezoelectric element B, it can be formed into a compact form, and because of its excellent heat resistance, the location where it is installed can be freely chosen, allowing a measurement of the combustion pressure with a very high accuracy.

Because the both electrodes D and E are mounted on the surface of the thin film of piezoelectric element B which is disposed toward the insulating member C, and the output lead wires F and G are passed through the insulating member C to be taken out of the cylinder head e, the electrodes D and E and the output lead wires F and G which represent the signal transmitting means are not directly exposed to the combustion chamber h, thus improving the durability and allowing an exact detection of the combustion pressure or oscillations over a prolonged period of time.

While aluminium nitride having a C-axis orientation is used as a material of piezoelectric element B which is formed into a thin film in this embodiment, the material is not limited to aluminium nitride, but other materials exhibiting the similar responses can also be used. By way of example, ZnO having a C-axis orientation, wurtzite compound of LiNbO3 type, single crystal of langasite (La3Ga5SiO14), quartz, PZT (lead zirconate titanate) and perovskite type oxide may also be used. However, the use of aluminium nitride is preferred in respect of durability. To manufacture a thin film of piezoelectric element B, processes such as sputting, ion plating, CVD, laser ablation, ion beam evaporation, laser evaporation and vacuum evaporation may be used.

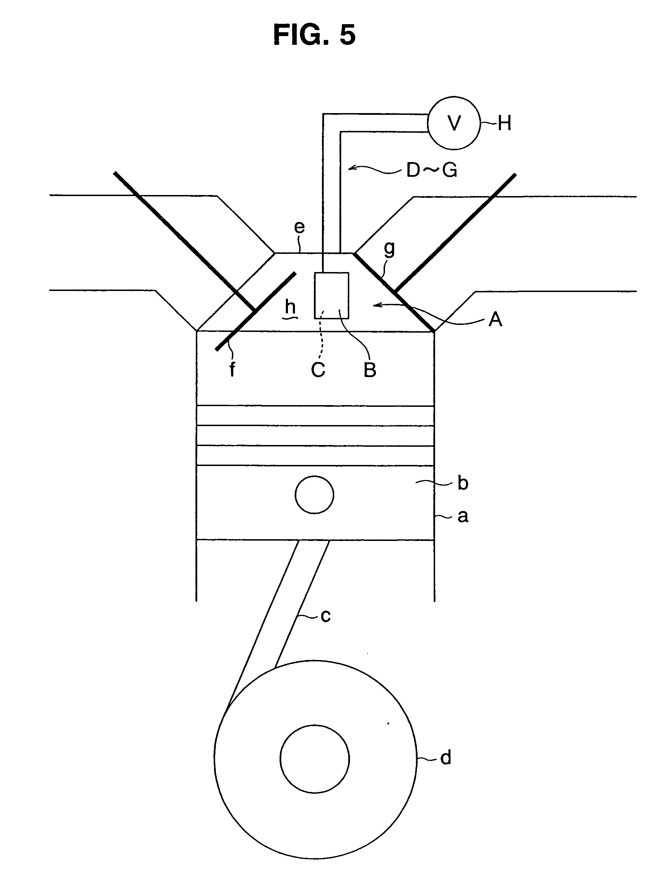

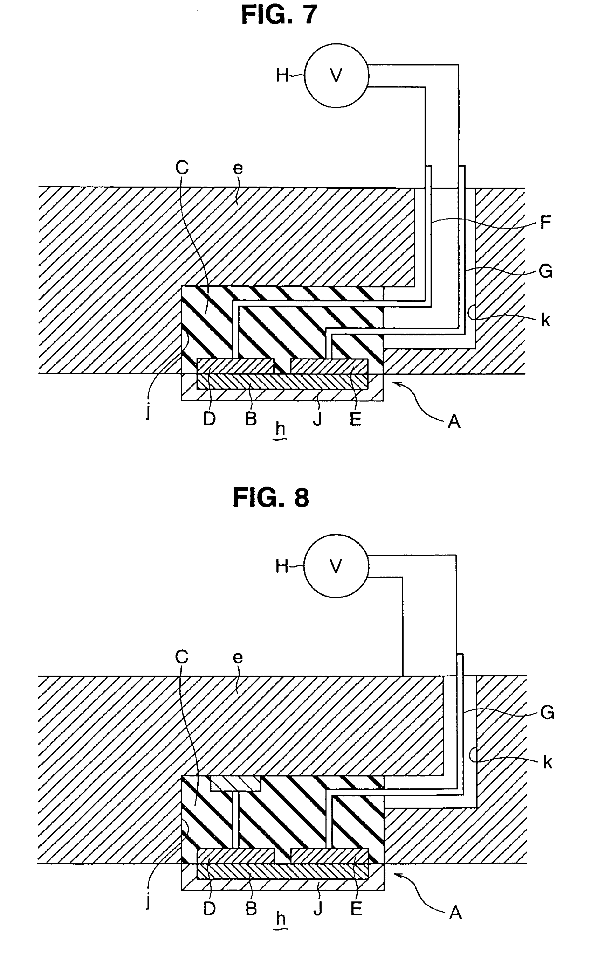

Figs. 5 and 6 show a modification of the embodiment shown in Figs. 3 and 4, and because a fundamental arrangement remains unchanged, similar parts are designated by like characters without a specific description thereof. In this embodiment, an output lead wire G connected one electrode E of a thin film of piezoelectric element B which is mounted on the wall surface of the cylinder head e toward the combustion chamber h is led through a signal duct opening k to the outside of the cylinder head e, but the output lead wire F connected to the other electrode D is passed through the insulating member C and connected to the cylinder head e as the ground. In other respects, the arrangement is similar to the embodiment shown in Figs. 3 and 4, achieving a similar functioning and effect as before.

Figs. 7 and 8 show modifications of the arrangements shown in Figs. 4 and 6, and similar parts as shown in Figs. 4 and 6 are designated by like reference characters without repeating their description. In these embodiments, the thin film of piezoelectric element B is mounted on the surface of cylinder head e toward the combustion chamber h, and the surface of the piezoelectric element B which is exposed to the combustion chamber is covered by a protective film J. By covering the piezoelectric element B with the protective film J, a damage to the piezoelectric element B can be prevented, and a deposition of carbon thereon during the use over a prolonged period of time can also be prevented. The protective film J comprises a refractory insulating material, which principally includes SiC, WC, B4C, TiC, ZrC, NbC, HfC, ZrO2, TiO2, Al2O3, SiO2, AlN, cBn, iTN, TiB2, ZrB2, CrB2 and MoB, but is not limited thereto.

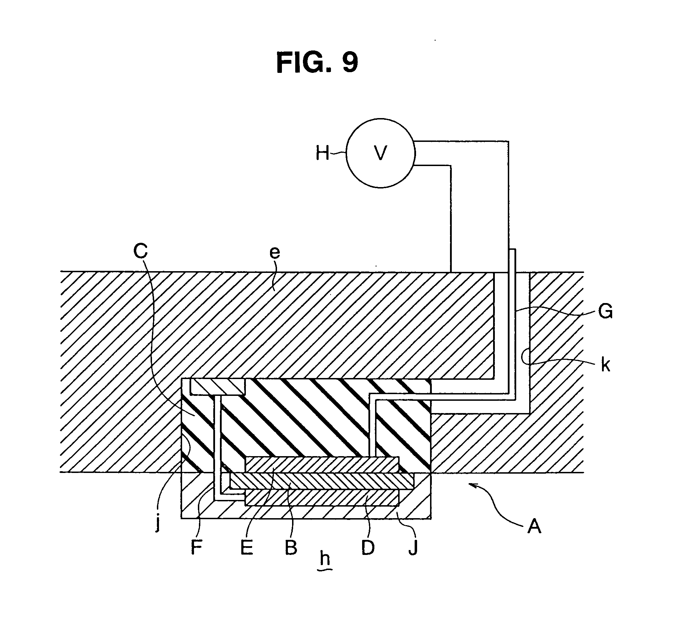

Fig. 9 shows another embodiment in which a thin film of piezoelectric element B is mounted on the surface of an insulating member C which is inserted into an insulating member insertion opening j formed in the wall surface of a cylinder head e which is disposed toward a combustion chamber h, and electrodes D and E are formed on the opposite surfaces of the piezoelectric element B. One electrode E is formed on the surface of the piezoelectric element B which is disposed toward the insulating member C while the other electrode D is formed on the surface of the piezoelectric element B which faces the interior of the combustion chamber h.

An output lead wire G connected to the electrode E passes through the insulating member C and a signal duct opening k to be taken out of the cylinder head e. On the other hand, an output lead wire F connected to the electrode D disposed toward the combustion chamber h passes through the insulating member C and is connected to the cylinder head e as the ground. The electrode D and its connected output lead wire F which are mounted on the side of the piezoelectric element B which faces the combustion chamber h are covered by a protective film J together with the thin film of the piezoelectric element B. In this embodiment, a similar functioning and effect as achieved in previous embodiments can also be achieved. In addition, in this embodiment, because the pair of electrodes D and E hold the thin film of the piezoelectric element B sandwiched, the electrodes D and E may have a greater area to pick up a signal than in the construction of the previous embodiments, allowing a greater signal to be picked up than in the previous arrangements. While the output lead wire F for the electrode D which is disposed on the outer surface is connected to the cylinder head e as the ground, it may be passed through the signal duck opening k in the cylinder head e to be taken outside in the similar manner as in the embodiment shown in Fig. 7.

In the embodiments shown in Figs. 3 to 9, in order to detect the combustion pressure within the cylinder of the internal combustion engine by the pressure sensor A which uses the thin film of piezoelectric element B, the pressure sensor A is directly mounted on the internal surface of the cylinder head e. However, the cylinder internal pressure may also be detected through an auxiliary part such as a glow plug which is mounted on the cylinder head e of the internal combustion engine.

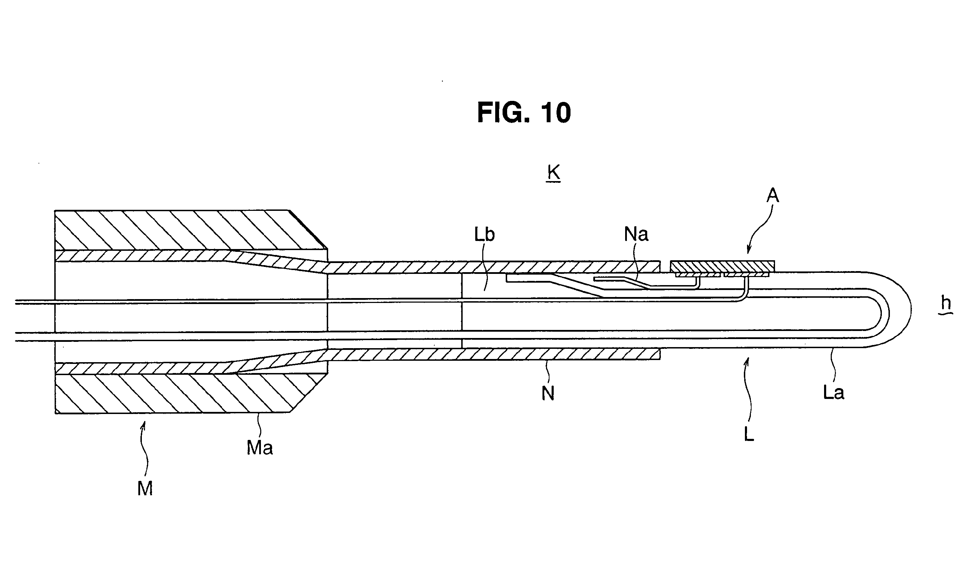

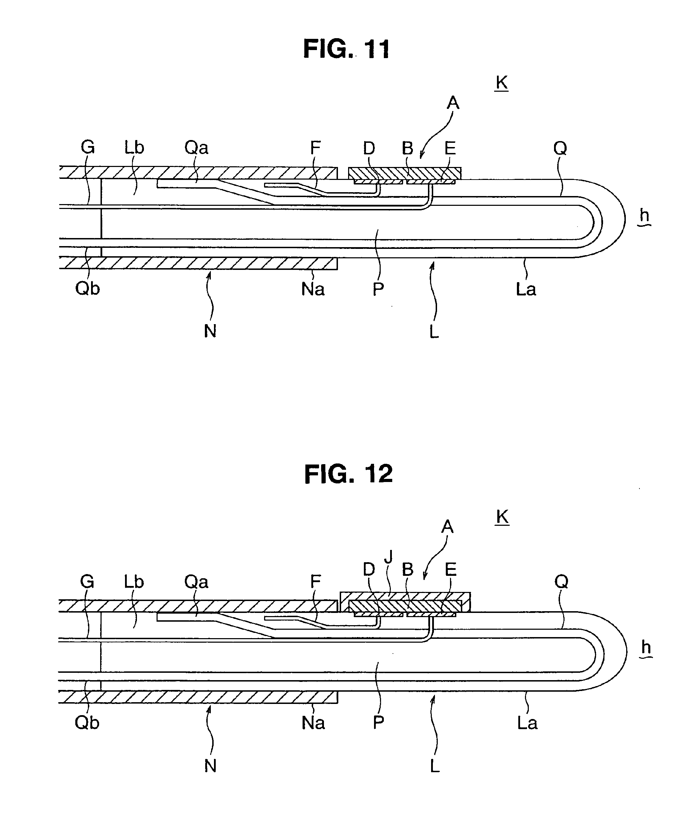

In the embodiments shown in Figs. 10 and 11, a pressure sensor A constructed in the manner mentioned above is mounted on a heater L of a glow plug K which is of ceramics heater type, and the glow plug K is fixed on a cylinder head e of an internal combustion engine, thereby placing a piezoelectric element B of the pressure sensor A at a position which faces a combustion chamber of the internal combustion engine. In this glow plug K, a ceramics heater L is secured through a metal outer sleeve (sheath) N to a distal end Ma (the rear end being omitted from illustration) of cylindrical housing M which is a mounting fixture to a cylinder head e, and when the housing of the glow plug K is mounted on the cylinder head e, a heating element La which is located at the distal end of the ceramics heater L faces a combustion chamber h of the internal combustion engine.

Describing the ceramics heater L of the glow plug K, a heating element (heater coil) Q is embedded within a ceramics insulator P which defines the body of the ceramics heater L, and one end (negative pole side) Qa of the heater coil Q is brought to the outer periphery of the ceramics insulator P and is joined as by brazing to the internal surface of the metal outer sleeve (sheath) N at the distal end thereof and thus is electrically connected thereto. The other end (positive pole side) Qb of the heater coil Q extends to a rear end Lb of the ceramics heater L (left end as viewed in Figs. 10 and 11), and is then connected through an electrode fitting, not shown, to an external connection terminal, not shown, at the other end of the cylindrical housing M.

A pressure sensor A is mounted on the external surface of the ceramics heater L in a region it projects externally through the distal end Na of metal outer sleeve N. The pressure sensor A is constructed in a similar manner as the pressure sensor A shown in Fig. 1, including a pair of electrodes D and E on the outer peripheral surface of the ceramics insulator P (which corresponds to the base material C shown in Fig. 1 and formed of an insulating material) and a thin film of piezoelectric element B mounted thereon. An output lead wire F acting as signal transmitting means which is connected to one electrode D extends through the ceramics insulator P and is brought to the outer surface in a region where the ceramics insulator is secured to the metal outer sleeve N to be conductively connected to the internal surface of the metal outer sleeve N. On the other hand, an output lead wire G connected to the other electrode E is led to the outside through a rear end Lb of the ceramics insulator P.

When the glow plug K with a pressure sensor constructed in the manner mentioned above is mounted on the cylinder head e of the internal combustion engine, the heating element La located at the distal end of the ceramics heater L is inserted into the combustion chamber h of the engine to serve as the glow plug K, and concurrently, the thin film of the piezoelectric element B mounted on the ceramics heater L toward the heating element La which projects externally of the metal outer sleeve N faces the combustion chamber h to detect a combustion pressure and oscillations which occur during the operation of the engine with a high accuracy.

Fig. 12 shows another embodiment, which has a fundamental construction which is common to the embodiment shown in Figs. 10 and 11. In this embodiment, the entire outer surface of the thin film of the piezoelectric element which is mounted around the ceramics insulator P which defines the ceramics heater L is covered by a protective film J. In other respects, the arrangement is similar to the embodiment shown in Fig. 11, achieving a similar functioning and effect as the latter. Since the thin film of the piezoelectric element B is covered by the protective film J, the thin film of the piezoelectric element B is not directly disposed to the environment which prevails within the combustion chamber h, and also a likelihood is avoided that the carbon may be deposited on pin-holes produced in the film of the piezoelectric element B to result in a conduction between the both electrodes D and E during use over a prolonged period of time.

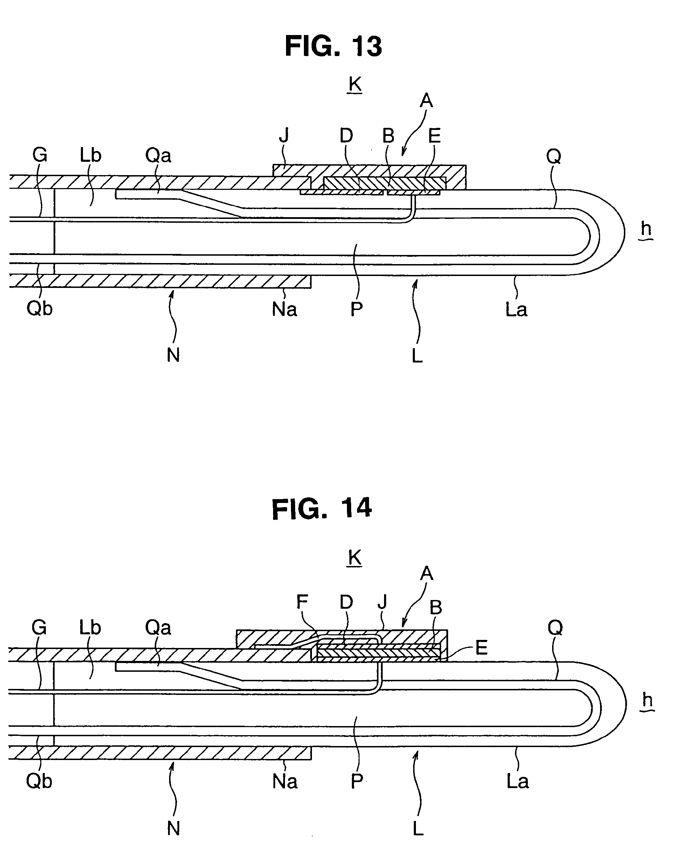

Fig. 13 shows another embodiment, which is distinct from the embodiment shown in Fig. 12 in the construction of the signal transmitting means (electrodes D and E and output lead wires F and G). In this embodiment, one of the electrodes, E, and associated output lead wire G are constructed in the similar manner as the embodiment shown in Figs. 11 and 12, but the other electrode D extends toward the distal end Na of the metal outer sleeve N (or extends to the left as viewed in Fig. 13) for direct contact with the internal surface of the metal outer sleeve N. The pressure sensor of this embodiment functions in the same manner as in the embodiment shown in Fig. 12, but on of the output lead wires need not be provided within the ceramics insulator P, thus simplifying the construction.

In an embodiment shown in Fig. 4, electrodes D and E are mounted on the opposite surfaces of the thin film of piezoelectric element B which is mounted on the outer surface of the ceramics insulator P in a region where it projects externally of the metal outer sleeve N. The electrode E disposed adjacent to the ceramics insulator P is connected to an output lead wire G which is disposed within the ceramics insulator P. An output lead wire F connected to the electrode D on the outer surface of the thin film of the piezoelectric element B (or on the opposite side from the ceramics insulator P) is connected to the external surface of the metal outer sleeve N. In this embodiment, the electrodes D and E which pick up an electrical signal detected by the thin film of piezoelectric element B can be made to be larger in size, allowing a signal to be picked up with a higher sensitivity. In addition, because the electrode D disposed on the outer surface of the thin film of the piezoelectric element B and the output lead wire F connected to the electrode D are covered by the protective film J, influences of the combustion chamber h are avoided if they are exposed to high temperature.

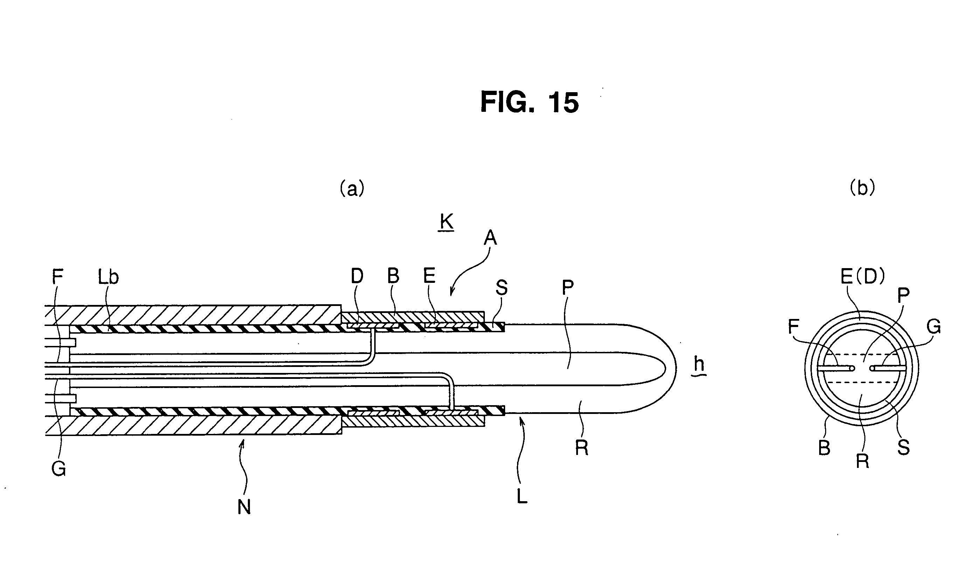

Figs. 15(a) and (b) show a structure for detecting a cylinder internal pressures of an internal combustion engine according to a further embodiment. In the embodiments shown in Figs. 10 to 14, the heater L of the glow plug K which is of ceramics heater type comprises the heater coil Q which is embedded within the body formed by the ceramics insulator P. However, in the present embodiment, the body of the ceramics heater L is constructed such that an intermediate insulator P is held sandwiched by conductive ceramics R, and the conductive ceramics R disposed on the opposite sides function as heating elements.

A tubular insulator S is mounted around the conductive ceramics R and the intermediate ceramics insulator P. A pair of annular electrodes D and E are fitted around a portion of the tubular insulator S which projects externally of a metallic outer sleeve N and an annular piezoelectric element B in the form of a thin film is disposed around the outer periphery of the electrodes. Output lead wires F and G which pick up a signal from the both electrodes D and E extend through the intermediate ceramics insulator P and are taken out of a rear end Lb of the ceramics heater L (to the left as viewed in Fig. 15). Also in this embodiment, when the glow plug K is secured to the cylinder head e of an internal combustion engine, the pressure sensor A can be disposed at a position which faces a combustion chamber h, thus presenting a higher sensitivity than when the pressure sensor is disposed externally as in the prior art to allow a detection of a combustion pressure with a high accuracy.

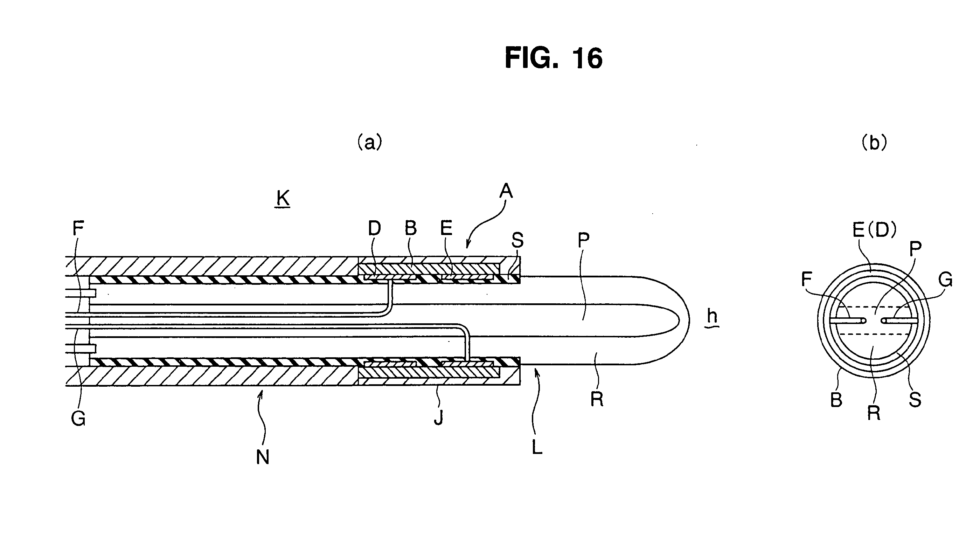

Figs. 16(a) and (b) show an embodiment which represents a modification of part of the embodiment shown in Fig. 15, but the fundamental arrangement is common thereto. In the embodiment, the outer peripheral surface of the annular piezoelectric element B in the form of a thin film is entirely covered by a protective film J. With the arrangement of this embodiment, a functioning and effect similar to that achieved by the arrangement of Fig. 15 can be achieved to protect the piezoelectric element B in the form of a thin film, thereby improving the durability of the pressure sensor A and allowing its performance to be maintained.

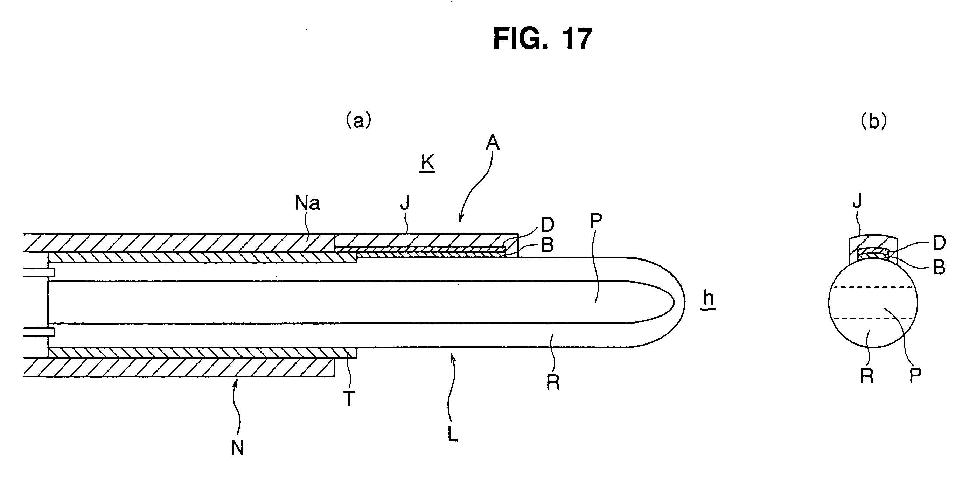

Figs. 17(a) and (b) show an embodiment which represents a modification of the signal transmitting means used in Fig. 16. A tubular insulator T is fitted around the outer periphery of the ceramics heater body comprising conductive ceramics R on the both sides and an intermediate insulator P which is held sandwiched therebetween in a region which is secured within a metal outer sleeve N. A piezoelectric element B in the form of a thin film is mounted on the outer surface of the conductive ceramics R in a region which is exposed externally of the tubular insulator T. An output electrode D, which serves as one of the signal transmitting means, is mounted on the outer surface of the piezoelectric element B in the form of the thin film. The electrode D on the outer surface is extended toward the distal end Na of the metal outer sleeve N and is electrically connected to the sleeve N.

This embodiment represents a type in which the electrodes are mounted on the opposite surfaces of the thin film piezoelectric element B, and the electrode D on the outer surface serves a signal transmission through the metal outer sleeve N while on the inner surface side, the conductive ceramics R is utilized as signal transmitting means. If the ceramics heater type glow plug K constructed in this manner is used, a similar functioning and effect can be achieved as in the previous embodiments.

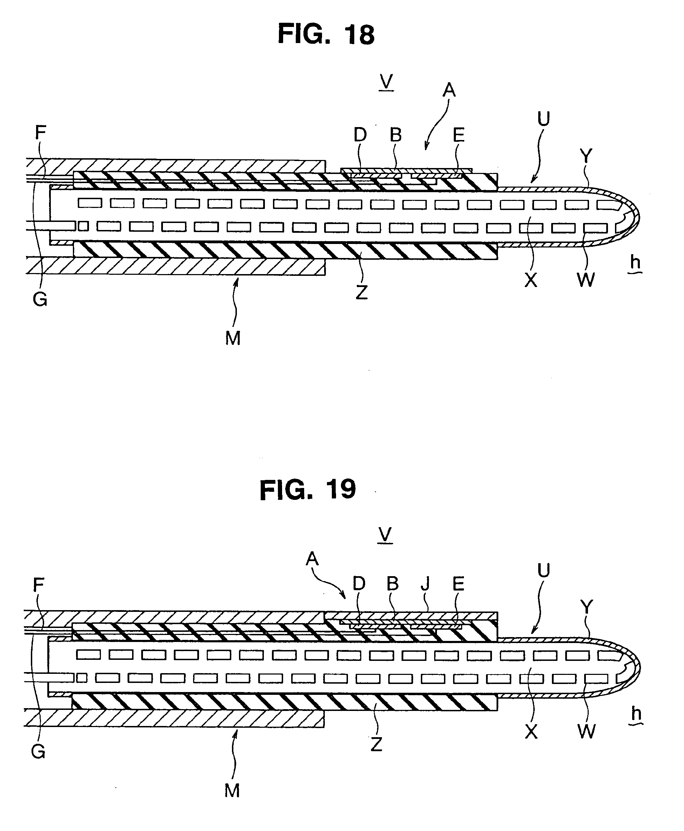

The embodiments shown in Figs. 10 to 17 are arranged to detect a cylinder internal pressure of an internal combustion engine using the ceramics heater type glow plug K. By contrast, Figs. 18 to 20 show embodiments in which a glow plug V using a heater U of a metal sheath type is used to detect a pressure in the cylinder of an internal combustion engine. For these glow plugs V, similar or common parts are designated by like characters as used before without repeating their description, and only a distinction from the previous embodiments will be described.

In the embodiment shown in Fig. 18, an insulating layer Z is disposed around the outer periphery of a metal sheath Y which contains an insulator X having a heater coil W embedded therein. A pair of output electrodes D and E which serve as signal transmitting means are mounted on the outer surface of the insulating layer Z, and the thin film piezoelectric element B is mounted on the outside thereof. The both electrodes D and E are connected to output lead wires F and G, respectively, which extend through the insulating layer Z to be taken out at a location rearwardly of the heater U.

In Fig. 19, a protective film J is formed on the outer surface of the thin film piezoelectric element B, in addition to the arrangement shown in Fig. 18. In other respects, the arrangement is common to the arrangement of Fig. 18.

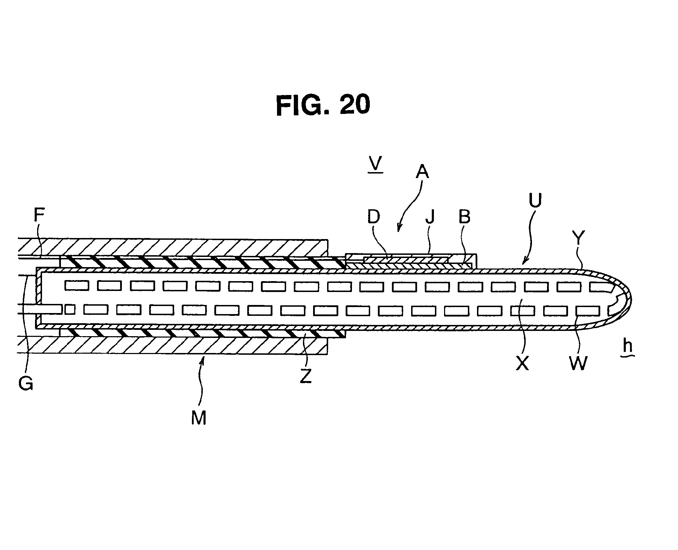

Fig. 20 shows an arrangement in which an output electrode D (the other electrode utilizes a metal sheath) as signal transmitting means which are disposed on the opposite surfaces of a thin film piezoelectric element B. The electrode D on the outer surface of the thin film piezoelectric element B is connected to an output lead wire F which extends through the insulating layer Z in the similar manner as in the previous embodiment to be taken out of the heater U. On the inner surface, the metal sheath Y functions as signal transmitting means for picking up a signal detected by the thin film piezoelectric element B. The embodiments shown in Figs. 18 to 20 can also achieve a similar functioning and effect as achieved by the previous embodiments.

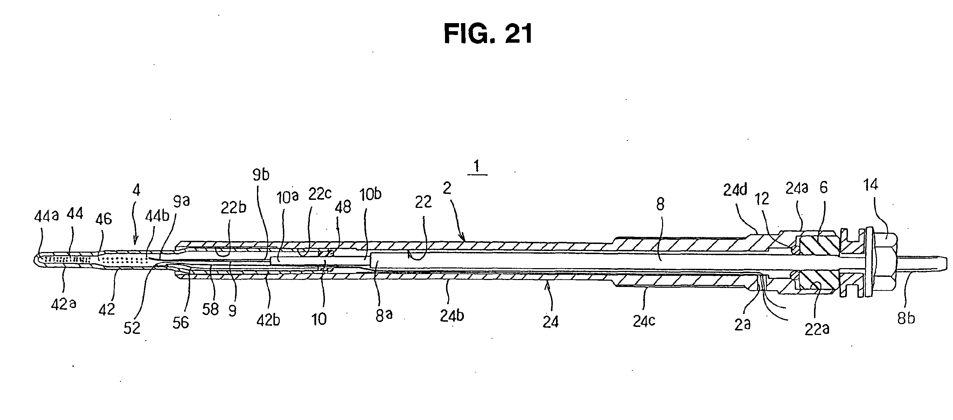

Fig. 21 shows another embodiment of a structure for detecting a cylinder internal pressure of an internal combustion engine using a glow plug with a pressure sensor (generally indicated by numeral 1) which serves an auxiliary part of the internal combustion engine. The glow plug 1 is a glow plug of metal sheath type including a cylindrical housing (a mounting fixture to the cylinder head) 2, the distal end (left end as viewed in Fig. 1) of which has a sheath heater 4 secured therein and the rear end of which is secured through an insulating bushing 6 to an external connection terminal (inner shaft as a rod electrode) 8. A heating element of the sheath heater 4 and the external connection terminal 8 are electrically connected together through an electrode lead wire 9 and an electrode fitting 10.

The sheath heater 4 comprises a sheath 42 in the form of a thin-walled, bottomed cylinder of a metal (such as stainless steel, for example), in which a coiled resistance heating wire (such as the nickel-chromium alloy, the ferro-chromium alloy, the tangsten wire, for example) as a heating element is inserted and which is then filled with a refractory insulating powder (for example, magnesia (MgO) or the like). The diameter of the sheath 42 is reduced as by swaging to densify the refractory insulating powder 46 while fixing the resistance heating wire 44, the electrode lead wire 9 and the electrode fitting 10 within the sheath 42. One end 44a (located at the left end as viewed in Fig. 1) of the resistance heating wire 44 is connected to the distal end toward the bottom of the sheath 42 while the other end 44b is connected to the distal end 9a of the electrode lead wire 9. It is to be noted that a seal member 48 of rubber (such as silicone rubber or fluorine-contained rubber) is inserted into the opening of the sheath 42 in order to prevent the refractory insulating powder 46 which fills the interior from spilling during the swaging operation.

As mentioned previously, the rear end 44b of the resistance heating wire 44 of the sheath heater 4 is connected to the distal end 9a of the electrode lead wire 9, the rear end 9b of which is connected to the distal end 10a of the electrode fitting 10 to be taken out of the sheath heater 4. The rear end 10b of the electrode fitting 10 is joined to the distal end 8a of the external connection terminal 8 as by butt welding. The rear end of the external connection terminal 8 is formed with threads 8b, and projects externally from the rear end of the housing 2, and a seal member 12 and an insulating bushing 6 are sequentially fitted over the threads 8b to be placed within an opening 22a of an increased diameter which is formed at the rear end of an internal bore 22 of the housing 2. Subsequently, a nut 14 is tightened to fix the insulating bushing 6 within the housing 2.

The internal bore 22 of the cylindrical housing 2 includes a distal end (left end as viewed in Fig. 21) 22b of a diameter which is slightly greater than the outer surface of the sheath 42, and also includes a press fit region 22c of a diameter which is slightly less than the outer surface of the sheath 42 at a location deeper beyond the opening 22b of the distal end (to the right-hand side as viewed in Fig. 21). The rear end the sheath 42 is disposed as a press fit into the press fit region 22c of the internal bore 22 of the housing, whereby the sheath heater 4 is secured to the housing 2. It should be noted that the technique to fix the sheath heater 4 is not limited to a press fit technique, but a brazing may be used for purpose of fixing.

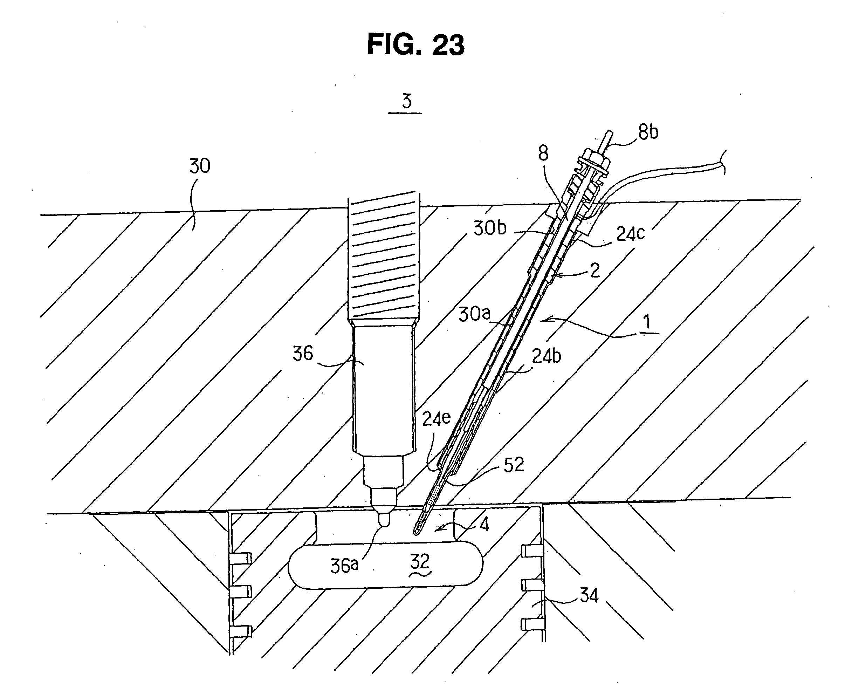

As mentioned previously, the rear end of the internal bore 22 of the housing is formed with an opening 22a of an increased diameter in order to insert the insulating bushing 6 which insulates and fixes the external connection terminal 8. The outer surface 24 of the housing 2 includes a rear end 24a of an increased diameter where the external connection terminal 8 is fixed. Intermediate a front portion 24b of a reduced diameter which is to be inserted into a mounting opening 30a of a cylinder head 30 (refer Fig. 23) to be described later and the portion 24a of an increased diameter located at the rear end, the outer surface 24 is formed with a mounting screw section 24c to be threadably engaged with the cylinder head 30 for purpose of fixing. A hexagonal section 24d which is disposed toward the rear end is rotated for threadable engagement with the cylinder head.

On the other hand, the sheath heater 4 which is secured within the internal bore 22 of the housing 2 toward the distal end thereof has a configuration of the sheath 42 which becomes smaller in diameter toward the heating element 42a located at the distal end while a rear portion 42b has a diameter slightly greater than the press fit region 22c of the internal bore 22 of the housing 2, whereby the sheath heater 4 is secured within the housing 2 while maintaining a hermetic seal within the housing 2 by pushing the rear portion 42b of a greater diameter into the press fit region 22c of the internal bore 22 of the housing as a press fit.

When assembling the sheath heater 4, initially the resistance heating wire 44, the electrode lead wire 9 which is connected to the rear end 44b of the resisting heating wire 44 and the distal end 10a of the electrode fitting 10 which is connected through the electrode lead wire 9 are inserted into the sheath 42, then the refractory insulating powder 46 is filled into the sheath 42, and the diameter is reduced as by swaging to densify the refractory insulating powder 46 to fix the resistance heating wire 44, the electrode lead wire 9 and the electrode fitting 10, as mentioned previously. Subsequently, the distal end 8a of the external connection terminal 8 is joined to the rear end 10b of the electrode fitting 10 as by welding. A subassembly including the sheath heater 4, the electrode fitting 10 and the external connection terminal 8 is inserted into the cylindrical housing 2 which is constructed in a manner mentioned above, and the rear end of the sheath 42 is disposed as a press fit into the press fit region 22c of the housing 2 to be secured therein.

When fixing the sheath heater 4 in the internal bore 22 of the hosing 2, the subassembly is inserted into the distal end (left end as viewed in Fig. 21) of the internal bore 22 of the housing, with the threads 8b of the external connection terminal 8 first. The threads 8b of the external connection terminal 8 are inserted into the rear end of the housing 2, whereupon the rear portion 42b of an increased diameter of the sheath heater 4 is inserted into the distal end of the housing 2.

The subassembly is further inserted into the housing 2 to dispose the rear end of the portion 42b of an increased diameter of the sheath heater into the press fit region 22c of the internal bore 22 as a press fit. When the sheath heater 4 has been disposed as a press fit into position, the threads 8b located at the rear end of the external connection terminal 8 which is connected to the rear portion thereof projects externally by a given amount through the rear end of the housing 2. The seal member 12 is fitted over the threads 8b of the external connection terminal 8 and is inserted into the opening 22a of an increased diameter which is located at the rear end of the housing 2. Subsequently, the insulating bushing 6 is fitted and inserted into the opening 22a of an increased diameter, and then the nut 14 is tightened to secure the insulating bushing 6.

As shown in Fig. 23, the glow plug 1 constructed in the manner mentioned above is inserted into the mounting opening 30a formed in the cylinder head 30 of the engine 3 to be secured therein. As mentioned previously, the outer surface of the housing 2 is formed with a mounting screw section 24c disposed toward the rear end and the portion 24b of a reduced diameter which is located forwardly of the screw section 24c. The portion 24b of a reduced diameter is inserted into the mounting opening 30a in the cylinder head 30, and the mounting screw section 24c is threadably engaged with female threads 30b formed toward the external end of the mounting opening 30a, thereby the securing the glow plug 1 in the cylinder head 30.

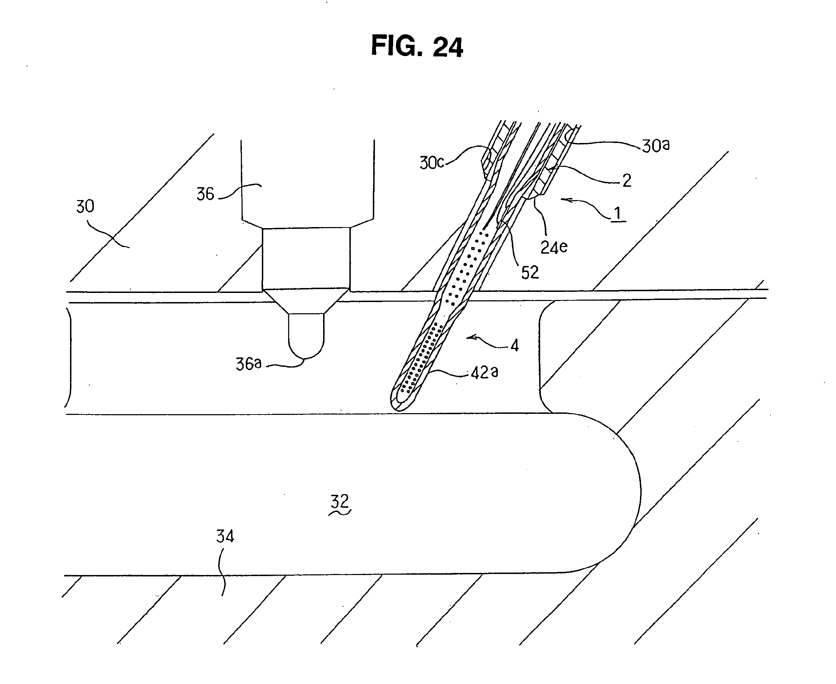

When the glow plug 1 is secured in the cylinder head 30 in this manner, a tapered seat 24e formed at the distal end of the housing 2 is in close contact with a seat surface 30c formed in the mounting opening 30a of the cylinder head 30, thus maintaining a hermetic seal of a combustion chamber 32 of the engine 3. The heating element 42a disposed at the distal end of the sheath heater 4 which is secured at the distal end of the housing 2 projects into the combustion chamber 32 of the cylinder while the threads 8b located at the real end of the external connection terminal 8 which extends externally from the rear end of the housing 2 projects externally of the cylinder head 30. The engine 3 shown in Figs. 23 and 24 is a diesel engine of direct injection type in which 32 represents a combustion chamber, 34 a piston and 36 an injector having an injection port 36a which faces the interior of the combustion chamber 32.

In the sheath heater type glow plug 1 for a diesel engine, a current flows from a positive pole of a battery (not shown) → external connection terminal 8 → electrode fitting 10 and electrode lead wire 9 → resistance heating wire 44 of the sheath heater 4 → sheath 42 → housing 2 → cylinder head 30 of the engine 3 in a manner well known in the art, and this current flow causes the glow plug 1 to be heated, assisting an ignition and a starting of the diesel engine.

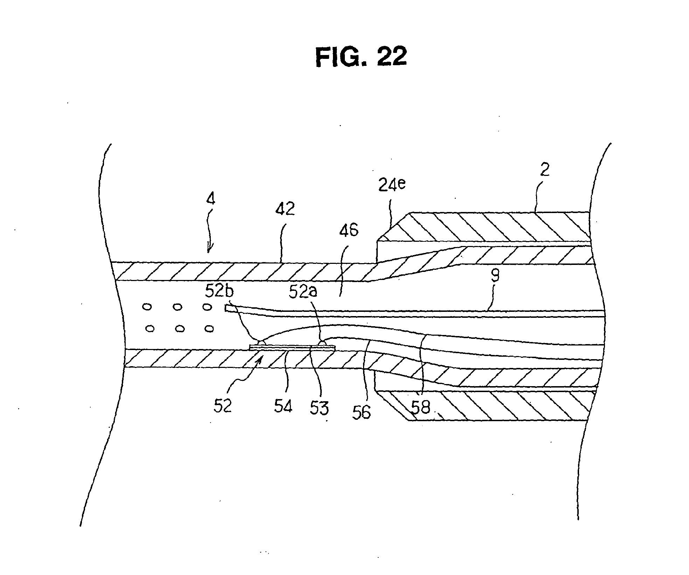

The glow plug 1 is additionally provided with a pressure sensor 52 which detects a combustion pressure within the cylinder during the operation of the engine. As shown to an enlarged scale in Fig. 22, the pressure sensor 52 according to this mode of carrying out the invention includes a piezoelectric element 53 in the form of a thin film and is characterized in that the piezoelectric element 53 is mounted beyond the seat 24e of the housing 2 to the cylinder head 30 or nearer the combustion chamber 32 (refer Fig. 24).

The piezoelectric element 53 is formed of aluminium nitride (AlN) having a C-axis orientation in the form of a thin film in this mode. The thin film piezoelectric element 53 is adhesively bonded to the internal surface of the sheath 42 through an insulator 54 such as ceramics or glass. A pair of electrodes 52a and 52b are formed on the surface of the piezoelectric element 53 which is disposed opposite from the insulator 54, and are connected to output lead wires 56 and 58, respectively, which serve as signal transmitting means which pick up a signal from the piezoelectric element 53. The output lead wires 56 and 58 pass through the refractory insulating powder 46 which fills the sheath heater 4 and are taken out of the sheath heater 4 through a clearance between the electrode fitting 10 and the seal member 48 and then extend through the space (signal transmitting passage) between the internal surface of the housing 2 and the outer surface of the external connection terminal 8 to the rear end of the housing 2. At a location rearward of the mounting screw section 24c which is used in mounting to the cylinder head 30, the housing 2 is formed with a radial opening 2a, through which the pair of lead wires 56 and 58 are taken out of the housing 2.

With the glow plug 1 having a pressure sensor constructed in the manner mentioned above, a combustion pressure generated within the combustion chamber 32 of the cylinder as the engine 30 is started is transmitted through the sheath 42 to the thin film piezoelectric element 53. An electrical signal which is delivered changes according to the piezoelectric characteristic of the piezoelectric element 53 as the combustion pressure changes. By feeding this output through the lead wires 56 and 58 to be input to measuring means, not shown, the combustion pressure can be detected.

With the glow plug 1 having a pressure sensor, the combustion pressure can be detected without causing a degradation in the performance of the engine 3 and the glow plug 1. In particular, according to this mode, because the piezoelectric element 53 of the pressure sensor 52 is mounted nearer the combustion chamber 32 beyond the seat 24e of the housing 2 with respect to the cylinder head 30, a higher sensitivity is obtained than when the sensor is located externally of the cylinder head 30 as in the prior art, enabling a detection of the combustion chamber with a high accuracy.

Since an ignition timing can be exactly detected from a change in the combustion pressure, an optimum ignition timing control can be performed. As a consequence, advantageous effects can be achieved including a saving of the fuel cost, a purification of the exhaust gas and an improvement of the engine performance. In addition, the use of a thin film of aluminium nitride for the piezoelectric element 53 allows it to be formed in a compact form and exhibits an excellent heat resistance, permitting a free choice of the location where it is installed, enabling a measurement of a combustion pressure with a very high accuracy.

The pressure sensor 52 can also function as a knock sensor, namely, can detect oscillations caused by a knock. An ignition timing can be controlled in response to this detected signal so as to prevent an abnormal combustion from occurring, thereby avoiding the occurrence of a knock.

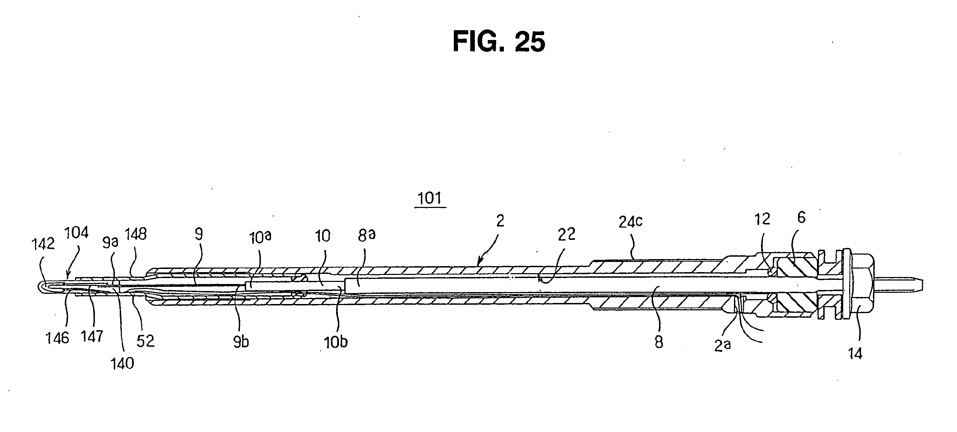

In the described mode, the glow plug 1 with a pressure sensor which includes a sheath heater (metal sheath type heater) as a heating element has been described, but the invention is not limited to the type of the heater, but is also applicable to a glow plug which incorporates a ceramics heater. Fig. 25 shows an arrangement of a glow plug 101 with a pressure sensor according to a second mode of carrying out the invention. In this mode, a ceramics heater type glow plug is integrally provided with a pressure sensor 52. A distinction from the embodiment shown in Fig. 21 relates to only a heater arrangement while the remainder remains unchanged, and accordingly, corresponding parts are designated be like characters as used before to omit a corresponding description.

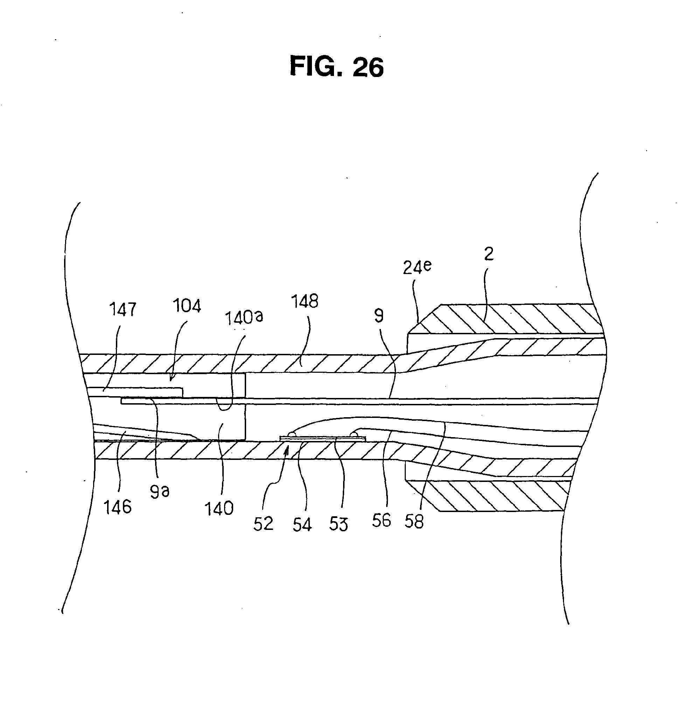

A glow plug 101 according to this embodiment includes a ceramics heater 104 having a ceramics insulator 140 which forms the body of the heater. A heating element 142 is embedded within the ceramics heater 140 and has one end which is connected to a negative pole lead wire 146 and the other end connected to a positive pole lead wire 147. The negative pole lead wire 146 is brought to the outer peripheral surface of the ceramics insulator 140 and joined as by a brazing to the internal surface of a metal outer sleeve 148 at the distal end thereof to be electrically connected thereto. On the other hand, the positive pole lead wire 147 extends toward the end opposite from the position where the heating elements 142 is embedded (left end as viewed in Fig .25), and is electrically connected by a brazing to the distal end 9a of the electrode lead wire 9 within a mounting opening 140a formed in the end face (refer Fig. 26 showing an essential part of Fig. 25 to an enlarged scale).

The rear end 9b of the electrode lead wire 9 is secured to the distal end 10a of the electrode fitting 10, the rear end 10b of which is coupled to the distal end 8a of the external connection terminal 8 at a location outside the sheath (metal outer sleeve) 148, in the similar manner as in the first mode. The ceramics heater 104 constructed in the manner mentioned above is joined to the metal outer sleeve 148 by brazing, and is secured through the metal outer sleeve 148 to the housing 2 (a mounting fixture to the cylinder head).

The ceramics heater type glow plug 101 is also provided with a pressure sensor 52 which is constructed in the similar manner as in the first mode, and the pressure sensor 52 will be described with reference to Fig. 26. Specifically, a piezoelectric element 53 in the form of a thin film of aluminium nitride is mounted on the internal surface of the metal outer sleeve 148 through an interposed insulator 54 at a location offset toward the distal end than the seat 24e of the housing 2 with respect to the cylinder head 30 (refer Figs. 23 and 24). A pair of output lead wires (signal transmitting means) 56 and 58 which pick up a signal from the piezoelectric element 53 extend through the metal outer sleeve 148 and the housing 2 (signal transmitting passage) to be taken out of the housing 2 through a radial opening 2a formed rearwardly of the mounting screw section 24c of the housing 2. The glow plug 101 with a pressure sensor according to this embodiment is also capable of achieving of similar functioning and effect as the glow plug 1 with a pressure sensor according to the embodiment shown in Fig. 21.

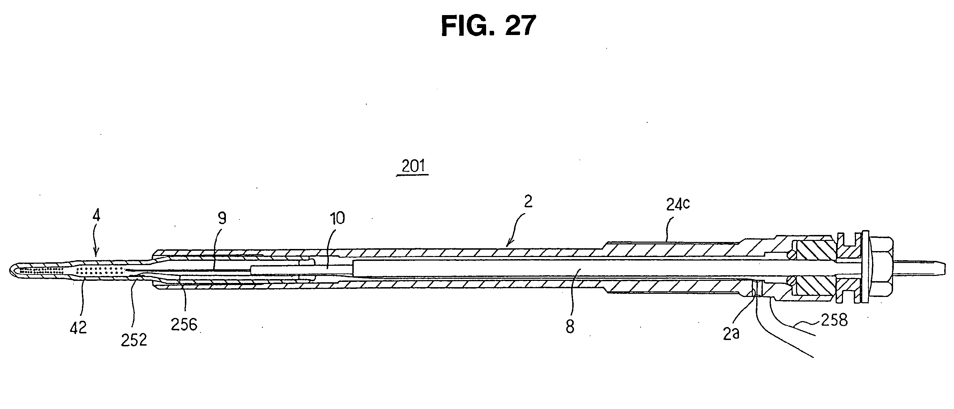

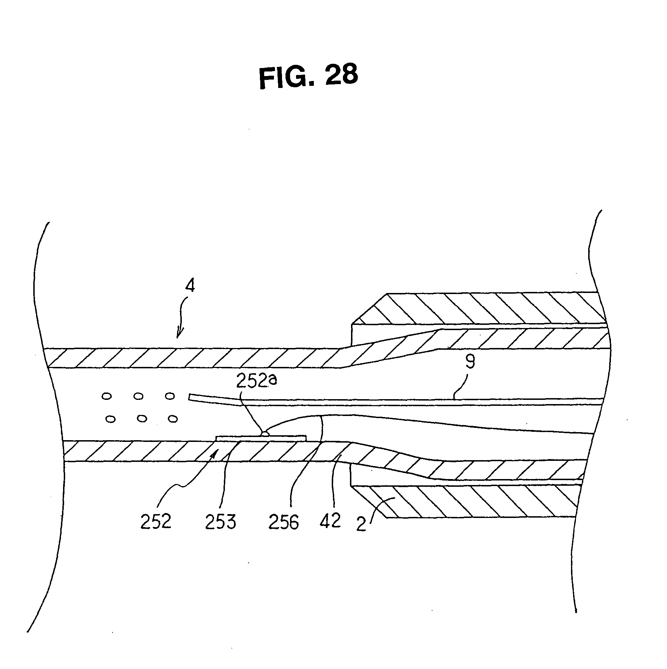

Fig. 27 is a longitudinal section showing an overall arrangement of a glow plug 201 with a pressure sensor according to another embodiment, and Fig. 28 is an enlarged view of an essential part thereof. In the glow plug 201 with the pressure sensor according to this embodiment, the construction of the glow plug itself remains the same as the glow plug 1 according to the embodiment shown in Fig. 21, and the construction of only a pressure sensor 252 is different. Accordingly, corresponding parts are designated by like characters as used before without repeating their description.

In this embodiment, the pressure sensor 252 has a piezoelectric element 253, which comprises a thin film of aluminium nitride in the similar manner as in the previous embodiments, but the piezoelectric element 253 is directly applied to the internal surface of the sheath 42. One electrode 252a is formed on the surface of the piezoelectric element 253 which faces away from the sheath 42 and connected to an output lead wire 256, which is one of signal transmitting means for picking up the signal from the piezoelectric element 253. The other signal transmitting means comprises an output lead wire 258 connected to the housing 2 at a location rearward of the mounting screw section 24c and extending from the outer surface of piezoelectric element 253 which is applied to the sheath 42 and extending through the sheath 42 and the housing 2. Also in this embodiment, a distinction resides only in the arrangement of the output lead wires 256 and 258 (inclusive of the sheath 42 and the housing 2) which pick up a signal detected by the piezoelectric element 253 of the pressure sensor 252, and thus is capable of achieving a similar functioning and effect as in the previous embodiments.

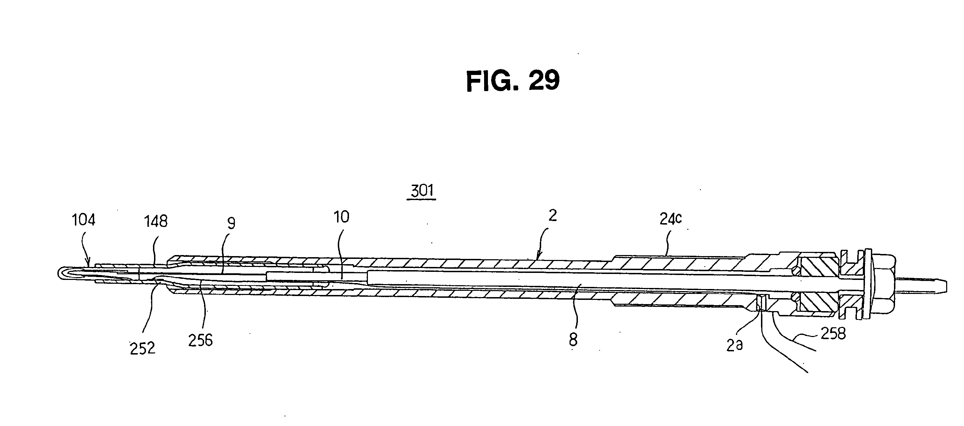

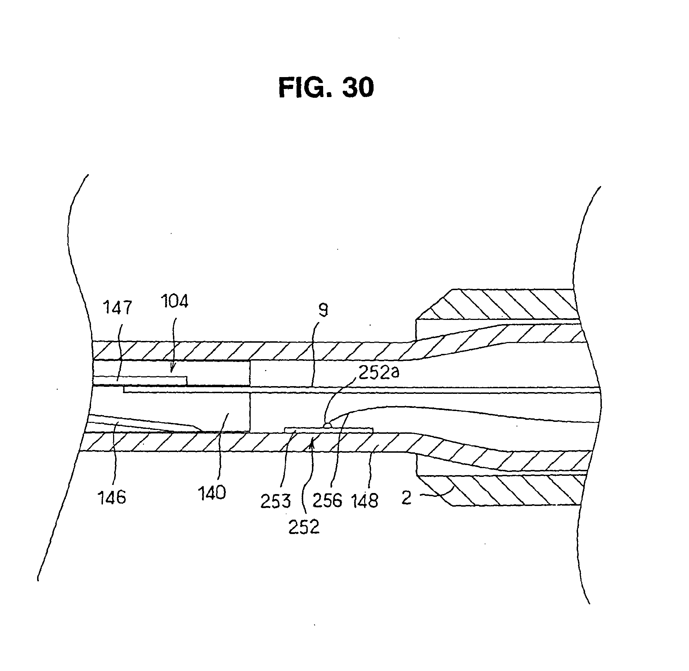

Figs. 29 and 30 are a longitudinal section of an overall arrangement and an enlarged view of an essential part thereof for a glow plug 301 with a pressure sensor according to a further embodiment. In this embodiment, a ceramics heater 104 which is similar to that of the embodiment shown in Fig. 25 is used as a heating source of the glow plug 301, and a method of taking out signal transmitting means which pick up a signal from a piezoelectric element 253 of a pressure sensor 252 is arranged in the similar manner as in the embodiment shown in Fig. 27. Specifically, one output lead wire 256 is connected to an electrode 252a formed on the inner surface of the piezoelectric element 253 and extends through the internal spaces (signal transmitting passages) within the metal outer sleeve 148 and the housing 2 and taken to the outside through a radial opening 2a which is formed rearwardly of the mounting screw section 24c of the housing 2. The other signal transmitting means comprises the metal outer sleeve 148, the housing 2 and a lead wire 258 which is taken out. Also in this mode, a similar functioning and effect as achieved in the previous modes can be achieved.

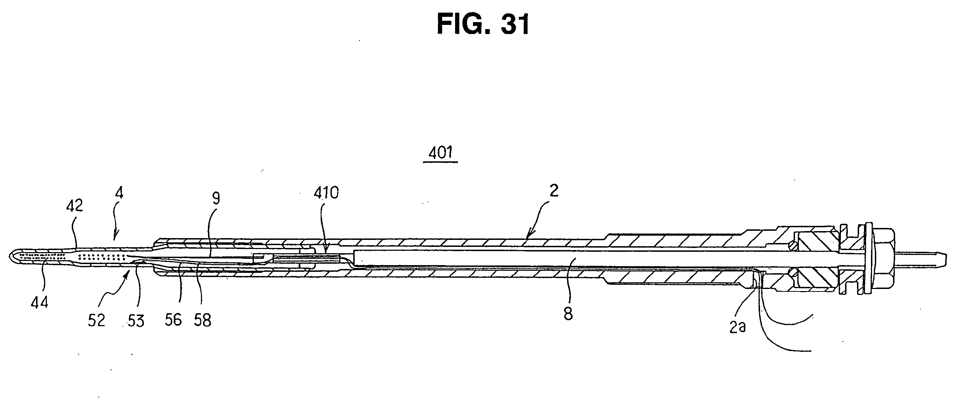

Fig. 31 is a longitudinal section showing an overall arrangement of a glow plug 401 with a pressure sensor according to another embodiment. In this embodiment, the arrangement of the glow plug 4 is the same as in the embodiment shown in Fig. 21, but the manner of taking out output lead wires 56 and 58 which are signal transmitting means from a pressure sensor 52 is different. Accordingly, corresponding parts are designated like characters as used before without repeating their description.

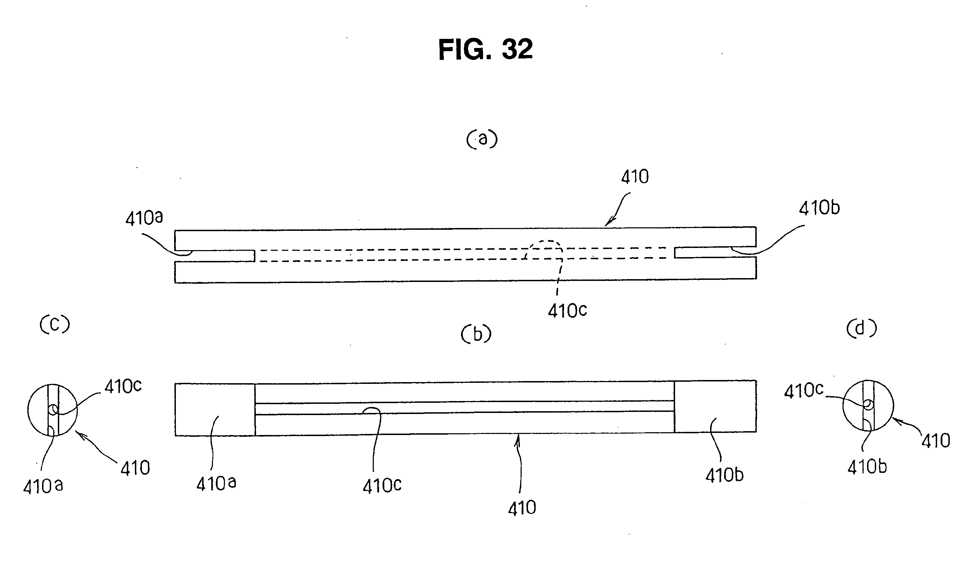

In this embodiment, an electrode fitting 410 which connects between an electrode lead wire 9 which is electrically connected to a resistance heating wire 44 of a sheath heater 4 and an external connection terminal (an inner shaft as a rod electrode) 8 has a configuration shown in Figs. 32(a) to (d), and the electrode fitting 410 is utilized to take the output lead wires 56 and 58 out of the housing 2.

The electrode fitting 410 comprises a member in the form of a circular column similar to the electrode fitting 10 used in the previous embodiments. Notches (lead wire holders) 410a and 410b are formed in the opposite ends of the member, and a through-channel 410c which communicates between the lead wire holders 410a and 410b at the opposite ends is formed to be utilized as part of a signal transmitting passage.

In this embodiment, a pair of electrodes are provided on a piezoelectric element 53 comprising a thin film of aluminium nitride which is mounted on the internal surface of the sheath 42 of the sheath heater 4 and connected to a pair of lead wires 56 and 58, which extend through the lead wire holders 410a and 410b disposed at the opposite ends of the electrode fittings 410 and the through-channel 410c which is provided therebetween to be taken to the outside through a radial opening 2a formed toward the rear end of the housing 2. In this embodiment, a similar functioning and effect as in the previous embodiments are achieved, and because the electrode fitting 410 is used as holders for the output pick up lead wires 56 and 58, the both lead wires 56 and 58 from the piezoelectric element 53 of the pressure sensor 52 can be simply taken out of the sheath heater 4 and be maintained in a stable condition without influencing the function of the glow plug 401.

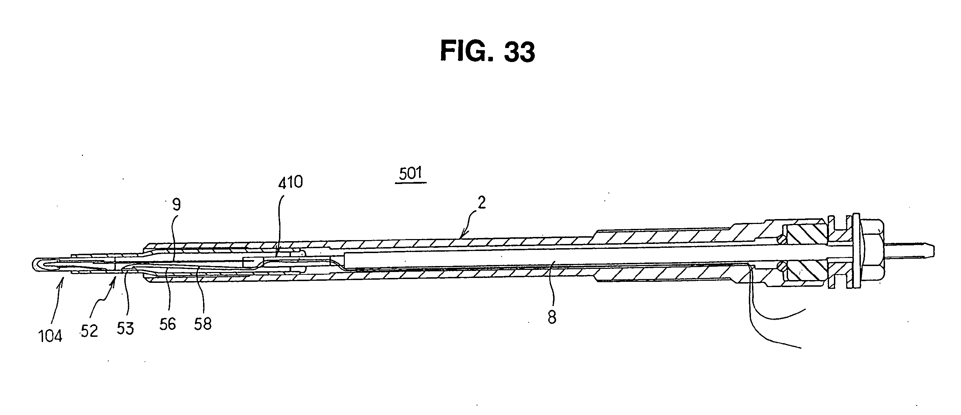

Fig. 33 is a longitudinal section showing an overall arrangement of a glow plug 501 with a pressure sensor according to a further embodiment. In this embodiment, only the construction of the heater is different from the glow plug 401 of the embodiment shown in Fig. 31, and a ceramics heater 104 is used as a heating source in this mode. In other respects, the arrangements are similar to the embodiment shown in Fig. 31. A pair of lead wires 56 and 58 which pick up a signal from the piezoelectric element 53 of the pressure sensor 52 is taken out of the ceramics heater 104 through the electrode fitting 410 shown in Fig. 32.

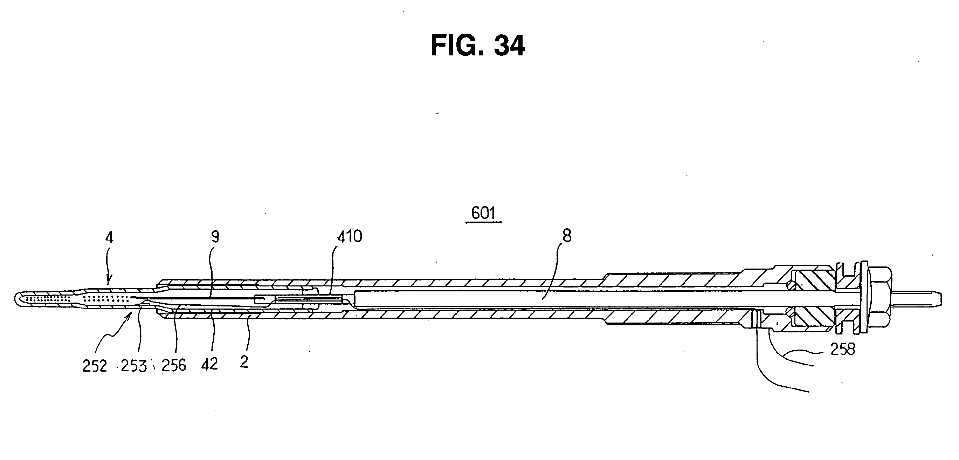

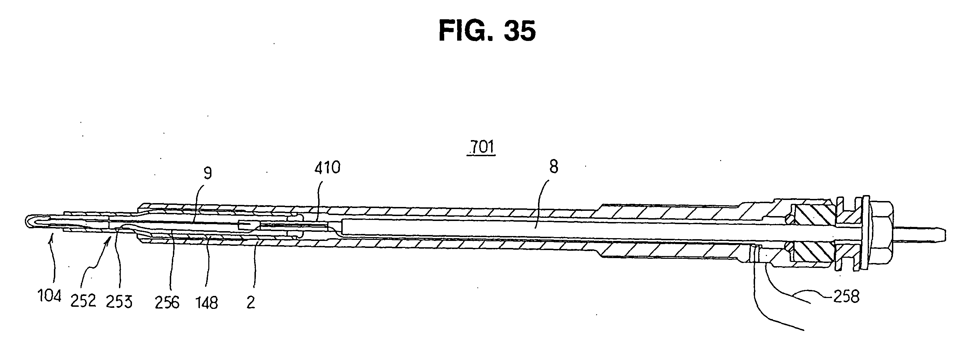

Figs. 34 and 35 are longitudinal sections showing overall arrangements of glow plugs 601 and 701 with a pressure sensor according to further embodiments. These embodiments are different from the embodiments shown in Figs. 31 and 33 in respect of the manner of taking out output pick up lead wires which represent the signal transmitting means from the pressure sensor 252. In a similar manner as the embodiment shown in Figs. 27 and 28, an electrode formed on the inner surface of the piezoelectric element 253 is connected to one lead wire 256, while a lead wire 258 representing the other signal transmitting means is taken out of the housing 2 through the sheath 42 and the housing 2. Said one lead wire 256 is taken out of the sheaths 42 and 148 which carry the heaters 4 and 104 through the electrode fitting 410 which includes the through-channel 410c and the lead wire holders 410a and 410b in the similar manner as in the embodiment shown in Figs. 31 and 33. Glow plugs 501, 601 and 701 each with a pressure sensor according to the embodiments shown in Figs. 33, 34, and 35 are capable achieving a similar functioning and effect as the glow plug 401 with a pressure sensor according to the embodiment shown in Fig. 31.

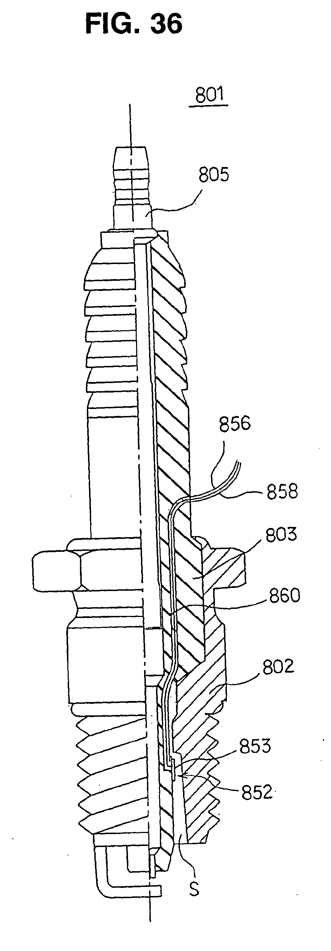

Fig. 36 is a front view, partly in section, of an ignition spark plug 801 used as an auxiliary part of an internal combustion engine according to another embodiment. In this embodiment, the ignition spark plug 801 is provided with a pressure sensor 852 which is similar to that used in the previous embodiments. The fundamental arrangement of the spark plug 801 remains unchanged from the prior art and therefore would not be described, a description being given only for the pressure sensor 852.

The ignition spark plug 801 includes a housing 802, in which a center electrode 805 is carried through an insulator 803, and a piezoelectric element 853 in the form of a thin film is applied to the outer surface of the insulator 803 at a location near the distal end thereof. A space S is formed between a portion of the insulator 803 where the piezoelectric element 853 is applied and the internal surface of housing 802 and accordingly, the piezoelectric element 853 faces a combustion chamber of a cylinder head, not shown.

Signal transmitting means (lead wires 856 and 858) which transmit an electrical signal detected by the piezoelectric element 853 to the outside extend through a signal transmitting passage 860 formed within the insulator 803, and are taken out at a location rearward (upward as viewed in Fig. 36) of the housing 802. Also in this mode, a pressure and oscillations within the combustion chamber of the engine during the combustion can be detected with a high sensitivity to allow an optimum ignition timing control, in the similar manner as in the previous embodiments.

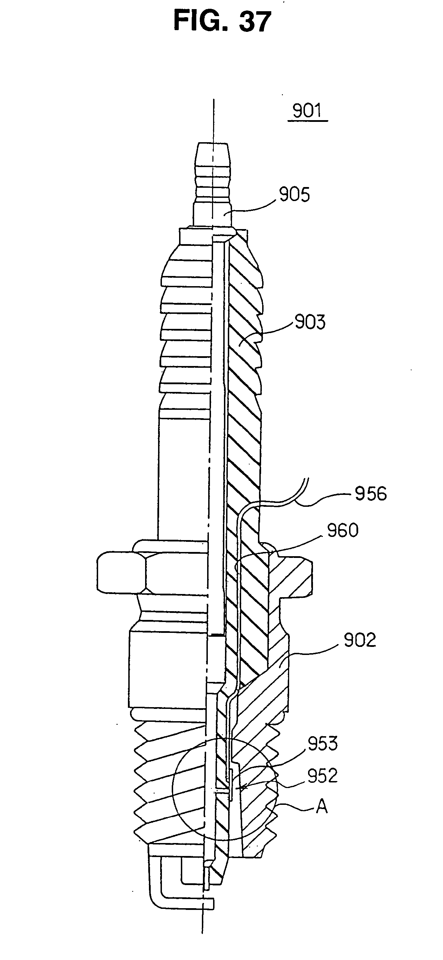

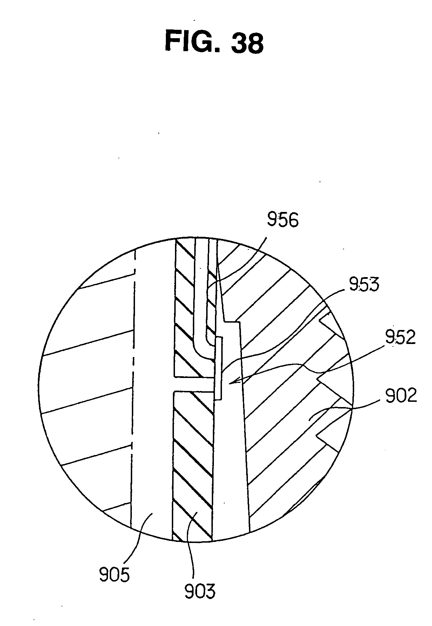

Figs. 37 and 38 show a modification of the embodiment shown in Fig. 36. The arrangement of an ignition spark plug 901 and the position where the piezoelectric element 853 of a pressure sensor 952 is taken out remain the same as in Fig. 36, but the arrangement of signal transmitting means which pick up an electrical signal from the piezoelectric element 853 is different. In this embodiment, a lead wire 956, which is one of the signal transmitting means, extends through a signal transmitting passage 960 formed within an insulator 903 to be taken out while the other signal transmitting means (ground side) extends radically through the insulator 903 and connected to a center electrode 905 which is externally exposed, as shown in Fig. 38 which shows an encircled region A of Fig. 37. This mode again allows a similar functioning and effect to be achieved as the mode shown in Fig. 36.

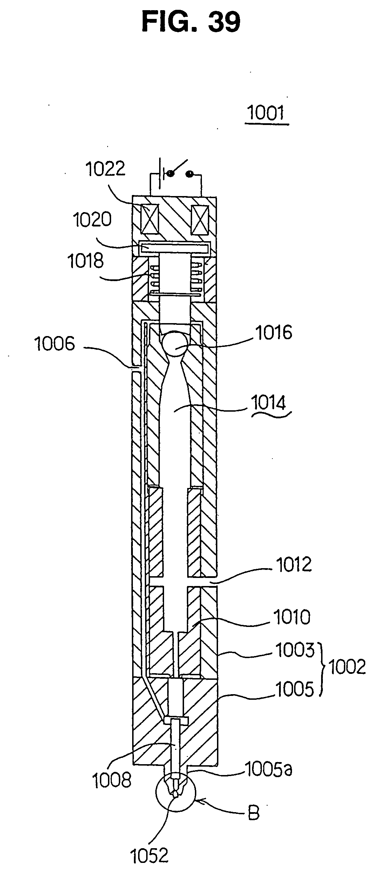

Fig. 39 shows another embodiment in which a pressure sensor 1052 is provided in a fuel injection nozzle (injector) 1001 which is an auxiliary part of an internal combustion engine. In this mode also, the arrangement of the injector 1001 itself is as usual, and includes an operating portion of the injector 1001 contained within a housing 1002 (an injector body 1003 and a nozzle body 1005 secured to the end thereof), and the pressure sensor 1052 which is a feature of the present invention is applied to a protuberance 1005a extending into a combustion chamber which is disposed on the end of the nozzle body 1005.

The arrangement of the injector 1001 will now be briefly described. 1006 represents a high pressure fuel inlet formed in the injector body 1002, 1008 a nozzle needle disposed within the nozzle body in a reciprocable manner, 1010 an intermediate member within the injector body, 1012 a low pressure outlet, 1014 a control chamber within the intermediate member 1010, 1016 a ball valve which is seated on a top valve seat in the control chamber 1014, 1018 a valve spring which urges the ball valve 1016 onto the valve seat, 1020 an armature plate and 1022 a magnet. It is to be noted that in Fig. 39, a mounting screw section and seat which are formed on the outer surface of the housing 1002 to be engaged with the cylinder head are omitted from illustration.

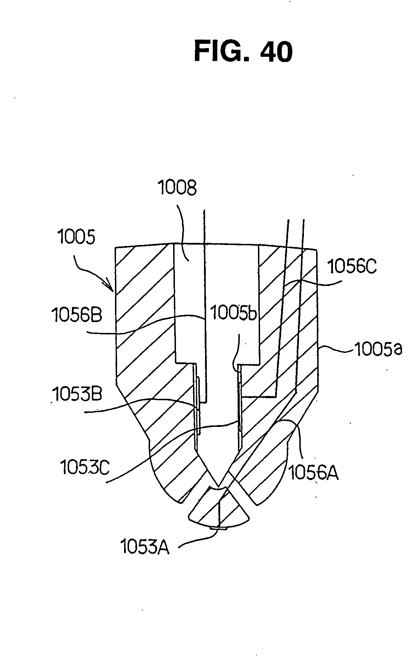

As shown in Fig. 40 which illustrates an encircled region B of Fig. 39 to an enlarged scale, the pressure sensor 1052 mounted on the free end of the nozzle body 1005 includes a piezoelectric element 1053 which may be applied to the front end face of the protuberance 1005a of the nozzle body 1005 (refer the pressure sensor indicated by character 1053A) or applied to the inner surface of an opening 1005b in which the needle 1008 of the nozzle body 1005 is fitted or applied to the outer surface of the needle 1008 (1053B, 1053C). Signal transmitting means which pick up outputs from the respective piezoelectric elements 1053A, 1053B, 1053C may comprise lead wires 1056A, 1056B, 1056C which extend through a signal transmitting passage formed within the nozzle body 1005 or within the needle 1008 on one hand and a ground connection to the nozzle body 1005 or the needle 1008 on the other hand. It is to be noted that the lead wire 1056 is taken out of the injector 1001 through the low pressure outlet 1012 formed in the injector body 1003.

The present embodiment representing an application of the present invention to the injector 1001 is also a capable of detecting a combustion pressure within the cylinder of the engine with a high sensitivity in the similar manner as in the previous embodiments and is also capable of detecting a manner of injection and a pressure of injection from the injector 1001, enabling a more optimum fuel injection control. As for detecting an abnormality in the injector, a pressure sensor may be installed on a fuel channel member.

It should be understood that the present invention is not limited to a diesel engine, but is applicable to any internal combustion engine. Also, the present invention is not limited to a glow plug, a spark plug and an injector described in connection with the various modes, but is also applicable to any auxiliary part which has a port in the cylinder of an internal combustion engine.

## Claims

1. A pressure sensor A **characterized in that** a piezoelectric element B in the form of a thin film and using a material which comprises a nitride or an oxide is formed on a base material C of an insulating material, and means D, E, F and G which transmit a signal from the piezoelectric element B are passed through the base materials to be taken out.

2. A pressure sensor A according to Claim 1 in which a pair of output electrodes D and E acting as the signal transmitting means are mounted on a side of the piezoelectric element B which is disposed toward the base material C.

3. A pressure sensor A according to Claim 1 in which the nitride comprises a thin film of aluminium nitride having a C-axis orientation.

4. A pressure sensor A according to Claim 1 in which the oxide is selected from a group comprising ZnO having a C-axis orientation, wurtzite compound of LiNbO3 type, a single crystal of langasite (La3Ga5SiO14), a quartz, PZT (lead zirconate titanate) and a perovskite type oxide.

5. A pressure sensor A according to Claim 1 **characterized in that** the surface of the thin film piezoelectric element B is covered by a protective film J.

6. A method of manufacturing a pressure sensor A including a piezoelectric element B formed of a nitride or an oxide as a material in the form of a thin film, **characterized in that** the thin film piezoelectric element B is manufactured by one of a sputting, an ion plating, CVD, a laser ablation, an ion beam evaporation, a laser evaporation and a vacuum evaporation.

7. A structure for detecting a cylinder internal pressure of an internal combustion engine, **characterized in that** a piezoelectric element B of a pressure sensor A is disposed at a location which faces a combustion chamber h of an internal combustion engine.

8. A structure for detecting a cylinder internal pressure of an internal combustion engine according to Claim 7, **characterized in that** the piezoelectric element B comprises a nitride or an oxide in the form of a thin film.

9. A structure for detecting a cylinder internal pressure of an internal combustion engine according to Claim 7, **characterized in that** the piezoelectric element B is mounted on a wall surface of a cylinder head e of the internal combustion engine which faces a combustion chamber h with an insulating member C interposed therebetween.

10. A structure for detecting a cylinder internal pressure of an internal combustion engine according to Claim 9, **characterized in that** a pair of output electrodes D and E are mounted as signal transmitting means on a surface of the piezoelectric element B which is disposed toward the insulating member C.

11. A structure for detecting a cylinder internal pressure of an internal combustion engine according to Claim 9, **characterized in that** output electrodes D and E as signal transmitting means are mounted on the opposite surfaces of the piezoelectric element B.

12. A structure for detecting a cylinder internal pressure of an internal combustion engine according to Claim 10 or 11, **characterized in that** output lead wires F and G connected to the electrodes D and E, respectively, and acting as signal transmitting means extend through the insulating member C before they are taken out.

13. A structure for detecting a cylinder internal pressure of an internal combustion engine according to Claim 10 or 11, **characterized in that** the output lead wire G connected to one electrode E and acting as signal transmitting means extends through the insulating member C before it is taken out while the output lead wire F connected to the other electrode D is connected to a cylinder head e as the ground.

14. A structure for detecting a cylinder internal pressure of an internal combustion engine according to Claim 10 or 11, **characterized in that** a surface of the piezoelectric element B which is disposed toward the combustion chamber h is covered by a protective film J.

15. A structure for detecting a cylinder internal pressure of an internal combustion engine according to Claim 7,
**characterized in that** the piezoelectric element B of the pressure sensor A is mounted on a portion of an auxiliary part of the internal combustion engine secured to a cylinder head e of the internal combustion engine which faces a combustion chamber h.

16. A structure for detecting a cylinder internal pressure of an internal combustion engine according to Claim 15, **characterized in that** the auxiliary part of the internal combustion engine is a glow plug K for an engine after-heat, the glow plug K including a heater L having an outer surface on which the piezoelectric element B is mounted through an insulator P interposed therebetween.

17. A structure for detecting a cylinder internal pressure of an internal combustion engine according to Claim 16, **characterized in that** the glow plug K includes a ceramics heater L having a heater coil Q embedded within a ceramics insulator P, the piezoelectric element B being mounted on the outer surface of the ceramics insulator P, output electrodes D and E acting as signal transmitting means being mounted on a side of the piezoelectric element B which is disposed toward the ceramics insulator P.

18. A structure for detecting a cylinder internal pressure of an internal combustion engine according to Claim 16, **characterized in that** the glow plug K is constructed to include an insulating ceramics P held sandwiched intermediate conductive ceramics R, output electrodes D and E acting as the signal transmitting means being mounted on the outer surface of the conductive ceramics R through an interposed insulator S.

19. A structure for detecting a cylinder internal pressure of an internal combustion engine according to Claim 16, **characterized in that** the glow plug V includes a heater U of a metal sheath type, output electrodes D and E acting as signal transmitting means being mounted on the outer surface of the metal sheath Y through an interposed insulator Z.

20. A structure for detecting a cylinder internal pressure of an internal combustion engine according to Claim 15, **characterized in that** the auxiliary part of the internal combustion engine is an ignition spark plug 801.

21. A structure for detecting a cylinder internal pressure of an internal combustion engine according to Claim 15, **characterized in that** the auxiliary part of the internal combustion engine is a fuel injection nozzle 1001.
